# EUROPEAN PATENT SPECIFICATION

(11) **EP 0 185 198 B1**
(45) Date of publication and mention of the grant of the patent: **22.12.1993**
(21) Application number: 85114443.6
(22) Date of filing: 29.09.1982
(51) Int. Cl.: H04N 1/00, G06K 9/36, G06F 15/20

(54) **Data compression system**
Datenkomprimierungssystem
Système de compression de données

(30) Priority: 01.10.1981 US 307808; 01.10.1981 US 307685; 01.10.1981 US 307686; 01.10.1981 US 307537; 01.10.1981 US 307809
(43) Date of publication of application: 25.06.1986
(62) Divisional of application: 82109016.4
(73) Proprietor: BancTec, Inc., Dallas Texas 75240 (US)
(72) Inventor: Van Tyne, Richard B., Richardson Texas 75080 (US); Dempster, Roy Eugene, Richardson Texas 75081 (US); McDonald, William C., Garland Texas 75042 (US); Levine, Richard C., Dallas Texas 75248 (US); Torkelson, John, Dallas Texas 75229 (US); Sanders, Weldon Arthur, Jr., Seagoville Texas 75159 (US); Johnson, Gerald Lee, Garland Texas 75042 (US); Nolting, Eugene C., Gardnerville Nevada 89410 (US); Allen, John Houston, Arlington Texas 76016 (US); Lebrun, Thomas Q., Dallas Texas 75205 (US)
(74) Representative: Grünecker, Kinkeldey, Stockmair & Schwanhäusser Anwaltssozietät

(56) References cited:
- DE-A- 2 558 264
- DE-A- 3 041 502
- DE-B- 2 557 922

## Description

The invention relates to a video data compression system adapted to be utilized in the processing of financial documents such as checks, invoices, payment advices, vouchers, drafts, credit card charges and the like, as set forth in the preamble of claim 1. A system of this kind is known from DE-25 57 922 B2.

Document processors that read and sort financial documents have been in common use for some time; however, various other functions that are necessary to most financial operations have been relegated to separate sub-systems or specialized processors to prevent major bottlenecks in the document processing system.

An effective document processor desirably includes a video image data compression apparatus. Specifically, in circumstances in which it is desired to store or recall a plurality of video images, the magnitude of data required for each individual image makes data compression a highly desired feature.

Known data compression schemes that are utilized in conjunction with black and white document images typically involve a scan that is perpendicular to the direction of document travel. Scanned data is then analyzed and long consecutive black or white sections are removed and replaced with coded substitutes. In more sophisticated data compression schemes, scanned data is analyzed and repetitive patterns, containing both black and white sections may be encoded and removed. However, present apparatus is not completely acceptable, particularly for an effective document processor system.

In the system known from the above reference, only two consecutive scan lines are analyzed at a time. In the data compression system, corresponding picture elements of two adjacent scan lines are assigned a particular "status" relative to a predetermined reference status. The status of each pair of elements is compared to the status of the next successive pair of elements along the direction of scanning and a transition signal is generated when a status change is detected between successive pairs of elements. In a sense, the data compression system compares successive pairs of picture elements along the scan axis. The comparison is constrained by fixed boundaries, i.e., two adjacent scan lines.

It is the object of the present invention to provide a video data compression system as set forth above that provides a higher degree of data compression than known systems.

This object is attained by the characterizing features of claim 1. Preferred embodiments of the invention are the subject matter of the dependent claims.

In the invention, the documents are continually transported across the focal plane of a stationary scanner, and repetitively scanned in a single axis. Circuitry is included in the digital scanner which permits the presence or absence of a document to be detected by means of an evaluation of the output of the digital scanner. Additional circuitry in the digital scanner allows a dynamic adjustment of reference levels, thereby accommodating multihued documents which may utilize shaded backgrounds.

In accordance with the invention, an image is obtained by vertically scanning a selected document. The image is then represented by a series of consecutive vertical scans identifying particular sections or cells or the image as either black or white. A plurality of consecutive scans is then temporarily stored and analyzed horizontally. Analyzed circuitry is utilized to identify certain consecutive black or white sections of the image, repetition of previous sections of the image or repetition of certain unique relationships within the image. The coded output of the analyzer's circuitry is then stored and may be utilized to reconstruct the image of the financial document.

### BRIEF DESCRIPTION OF THE DRAWINGS

The invention, as well as a preferred mode of use, further objects and advantages thereof, will best be understood by reference to the following detailed description of an illustrative embodiment when read in conjunction with the accompanying drawings, wherein:
Figures 1a and 1b form a general block diagram of a document processing system;
Figure 2 depicts a diagrammatic view of the document transport of the document processing system;
Figure 3 depicts a diagrammatic view of the camera system of the document processor;
Figures 4a-4i depict a schematic view of the components of the camera buffer and interface circuitry of the document processor;
Figures 5a-5o and Figures 6a-6o depict a schematic view of the components of the data compression system of the document processor;

### GENERAL SYSTEM DESCRIPTION

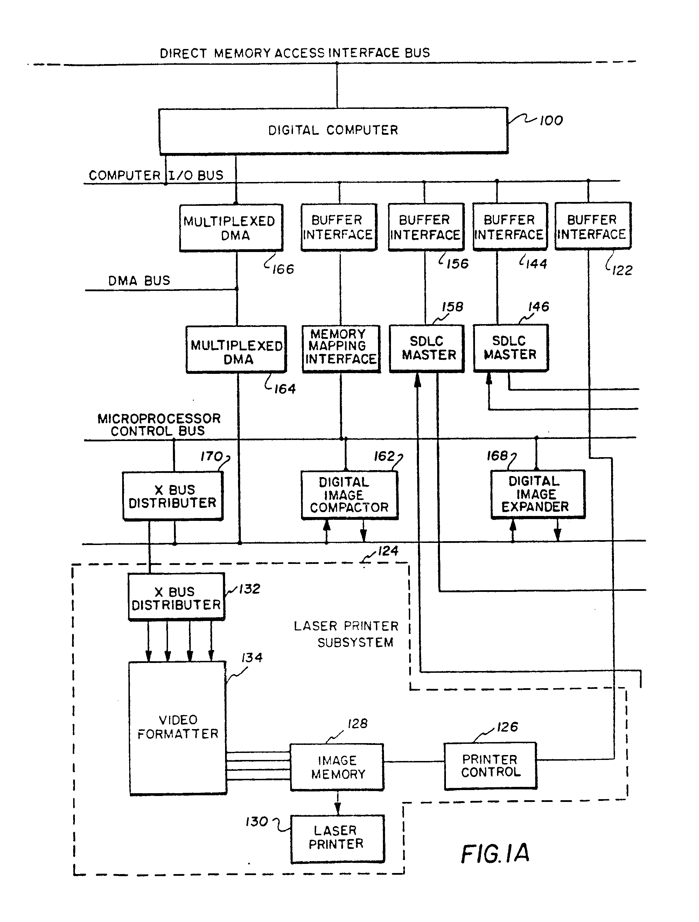

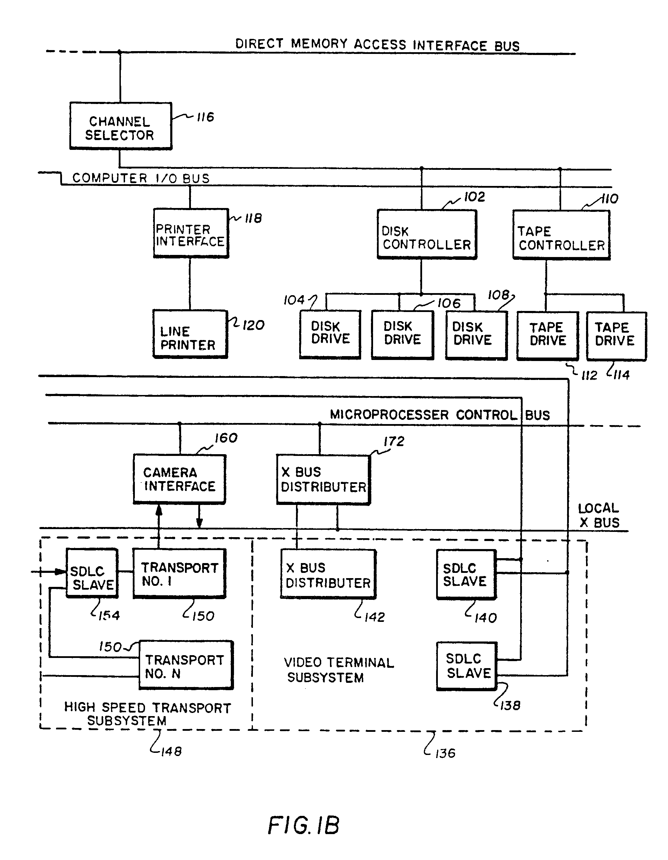

Referring to Figures 1a and 1b, there is depicted a general block diagram of the various subsystems comprising the document processing system to which the present invention is applicable.

The document processing system is controlled by _{,}digital computer 100. Digital computer 100 coordinates the storage and retrieval of digitized document images and associated data which are stored, in the disclosed embodiment, in magnetic disk storage. Disk controller 102 controls the actual access of digitized document images via disk drives 104, 106, and 108. Additional data, accounting information or program data may be accessed by digital computer 100 through tape controller 110 which controls magnetic tape drives 112 and 114. It will be appreciated by those skilled in the art that disk controller 102 and tape controller 110 may control an increased or decreased number of disk or tape drives, as a matter of design choice. Digital computer 100 may selectively access either magnetic disk storage or magnetic tape storage through channel selector 116.

Digital computer 100, in the embodiment disclosed, interfaces with a local operator via the computer I/O bus and printer interface 118. Printer interface 118 controls line printer 120. In alternate modes of operation wherein remote communication with digital computer 100 is desired, a modem and appropriate interface circuitry may be utilized.

Digital computer 100 also controls the operation of laser printer subsystem 124, through laser printer interface 122. Laser printer subsystem 124 is utilized to provide hard copy of selected digital images and may be utilized to generate account statements, billing statements, or other correspondence comprising any combination of alphanumeric characters and images. The operation of laser subsystem 124 is described in greater detail herein.

Video terminal subsystem 136 is utilized in the document processing system to provide a real time, controllable video display of selected documents and alphanumeric information. The display is utilized to facilitate processing of information on each document. Digital computer 100 controls the operation of video terminal subsystem 136 through buffer interface 144 and synchronous data link control master 146. A plurality of video display terminals may be utilized with each SDLC master, in a manner which will be explained in detail below.

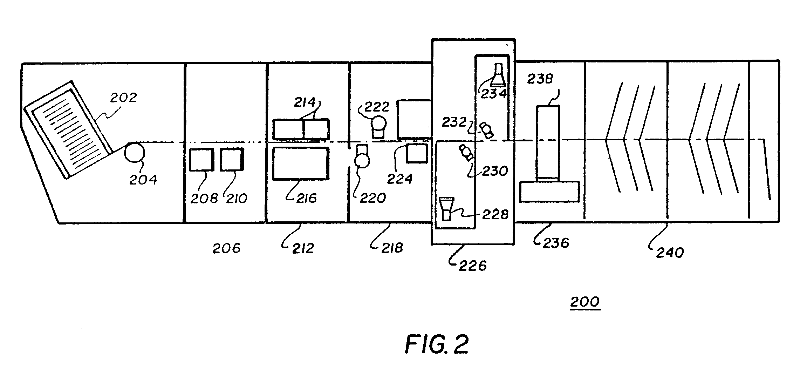

High speed transport subsystem 148 is utilized to transport individual documents through image capture stations, machine readers, encoders and sorters. A plurality of high speed transports may be utilized within each document processing system, thereby increasing the capacity of an individual system. High speed transport system 148 is controlled utilizing buffer interface 156 and synchronous data link control master 158. High speed transport system 148 will be explained in greater detail with respect to Figure 2.

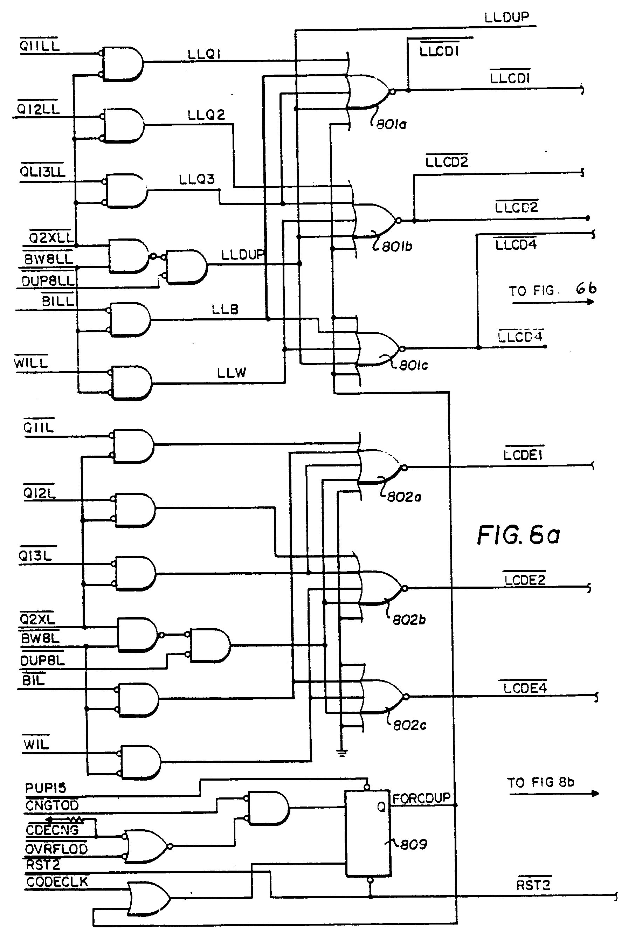

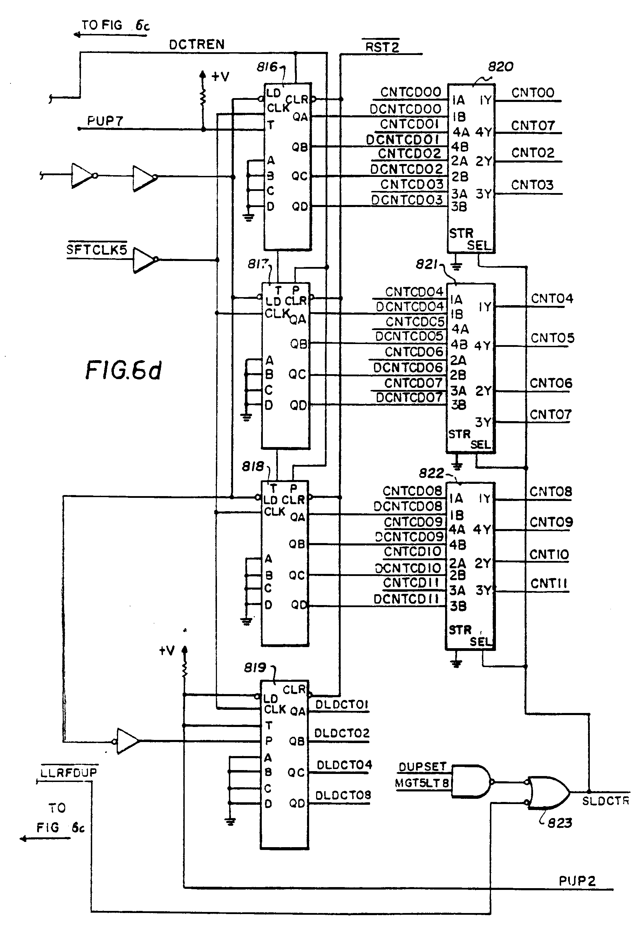

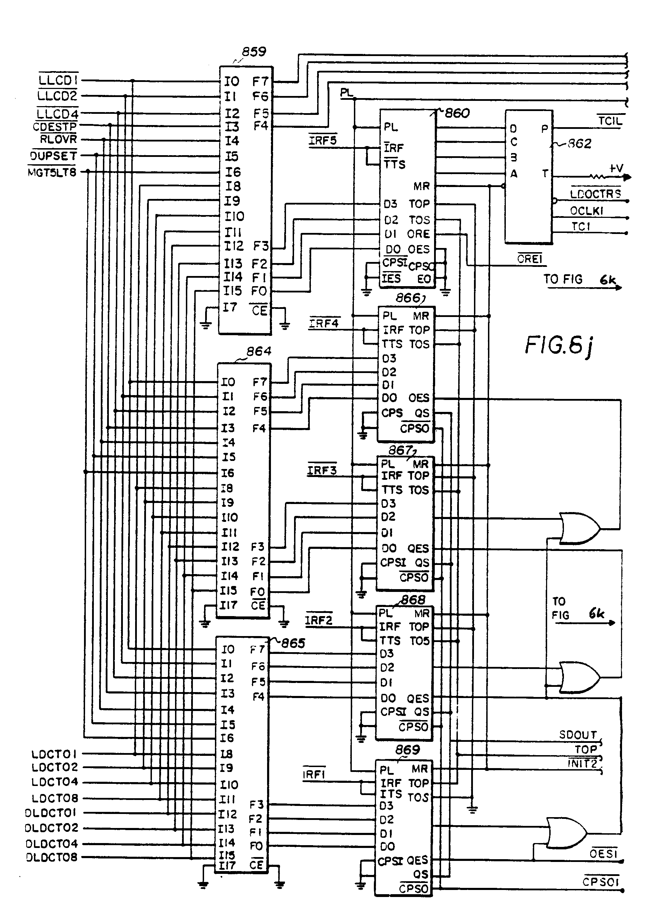

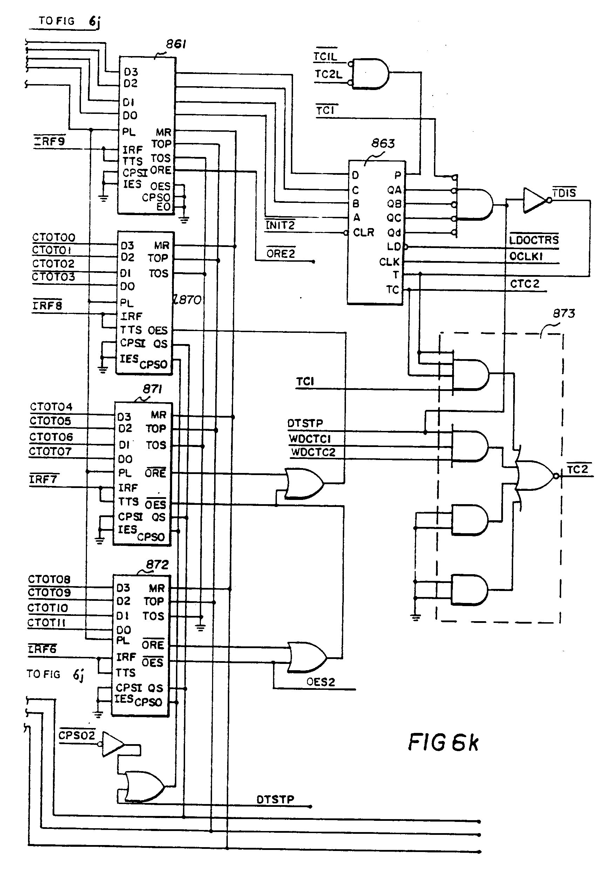

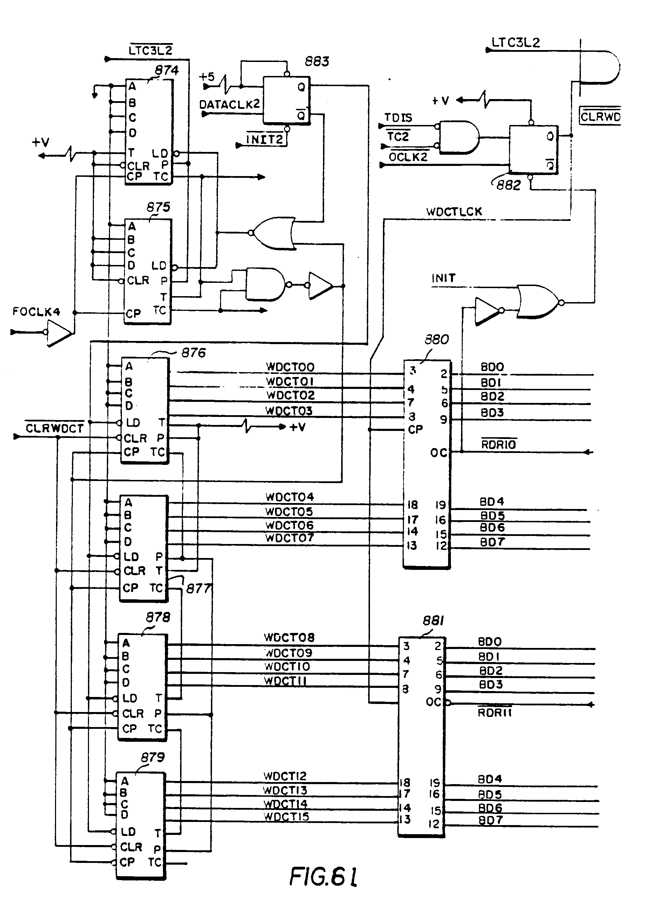

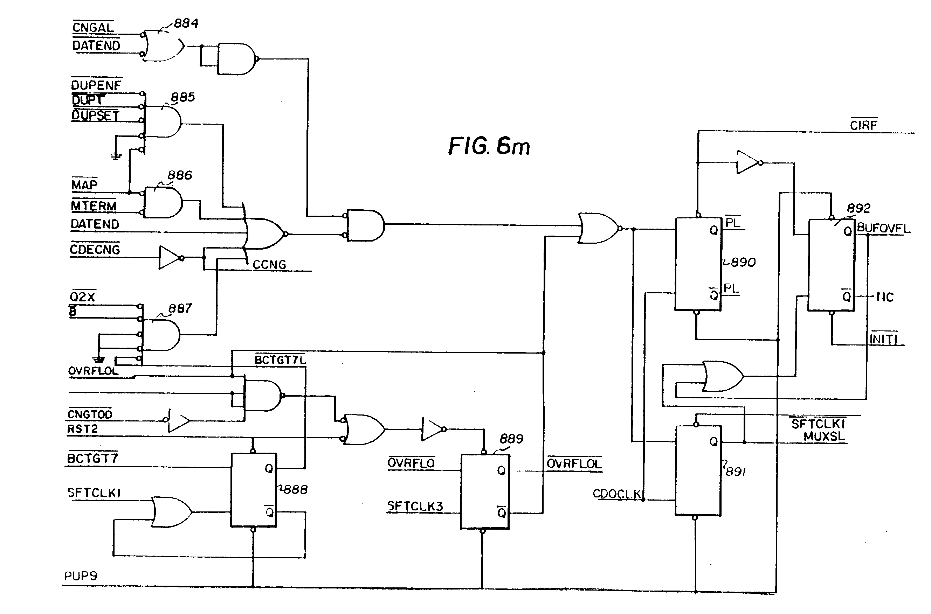

Digital image data obtained from the digital camera or cameras installed in each high speed transport is transferred to camera interface 160. Camera interface 160 is described in detail with reference to Figures 6a through 6i and is utilized to couple the image data to digital image compactor 162. Digital image compactor 162 is utilized to remove any redundancies contained in a selected image and to encode the remaining data. In addition to the specific algorithm taught in the disclosed embodiment, the document processing system will function with other known data compaction algorithms, such as, for example, the CCITT standard algorithm. The thus compacted digital image will require substantially less storage space in the document processing system. The compacted image data may be transferred to storage via multiplexed direct memory access 164 and multiplexed direct memory access 166. Two direct memory systems are utilized in order to provide compatible interfaces between the local X bus and the direct memory access interface bus of digital computer 100.

Retrieval and display of a compacted digital image may take place in several ways. A compacted image is transferred to the local X bus via direct memory access 164 and direct memory access 166. The compacted image is applied to digital image expander 168. The redundancies present in the original image are restored and the subsequent image is transferred via X bus distributor 170 or X bus distributor 172 to either laser printer subsystem 124 or video terminal subsystem 136 for reproduction of a hard copy or an electronic image.

### DIGITAL COMPUTER

The document processing system utilizes a digital computer 100, Figure 1, to control the operation of the system and coordinate the storage and retrieval of document images.

Supplementing the computer's main memory store are disc drives 104, 106 and 108, Figure 1, and tape drives 112 and 114, Figure 1.

Digital computer 100 also includes a rechargeable battery backup system (not shown) to sustain the main memory in the event of a power failure. The preferred embodiment of digital computer 100 utilizes a battery rated at 320 megabyte-minutes, which is capable of maintaining the memory integrity of 16 megabytes for twenty minutes.

### DOCUMENT TRANSPORT

Referring now to Figure 2, there is depicted a diagrammatic plan view of document transport 200. The transport constructed and depicted in Figure 2 utilizes high speed endless belts which are driven by pinch rollers in the manner well known in the art. The pinch rollers are driven by synchronous AC motors at a nominal speed of 52 inches per second in the disclosed embodiment. Sections of the transport may be driven at different speeds in a manner described below.

Documents are loaded into document transport 200 by means of document hopper 202. Single documents are loaded from document hopper 202 via feed drum 204. The documents are then passed along document transport 200 between rollers and the endless belts (not shown).

The first section of document transport 200, reader section 206, includes an optical character reader 208 and a magnetic ink character reader 210. Those skilled in the art will appreciate that a single model optical reader can function as either an OCR reader or may be utilized to optically read MICR characters with appropriate control electronics. OCR reader 208 may be utilized in the applications wherein the amount field or other information is printed in an OCR format.

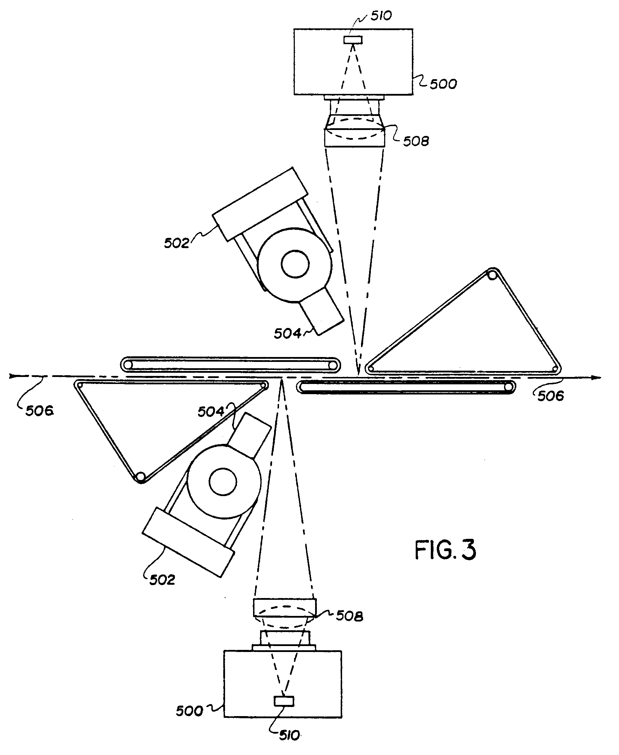

The next section of document transport 200 is encoder section 212. Encoder section 212 includes hammer bank assembly 214 and die and ribbon assembly 216 and is utilized to encode selected documents with selectable indicia, while the document is traversing document transport 200. The operation of the encoder section will be explained in greater detail with reference to Figure 3.

Section 218 of document transport 200 is the endorser section. Endorser section 218 contains ink jet printers 220 and 222 and endorser 224. Ink jet printers 220 and 222 are standard state of the art ink jet printers that may be utilized, in the disclosed embodiment, to print selected indicia upon each document which passes through document transport 200. The selected indicia may be utilized to assist in audit trail functions or in any other function desired. Endorser 224 is utilized to endorse documents such as checks.

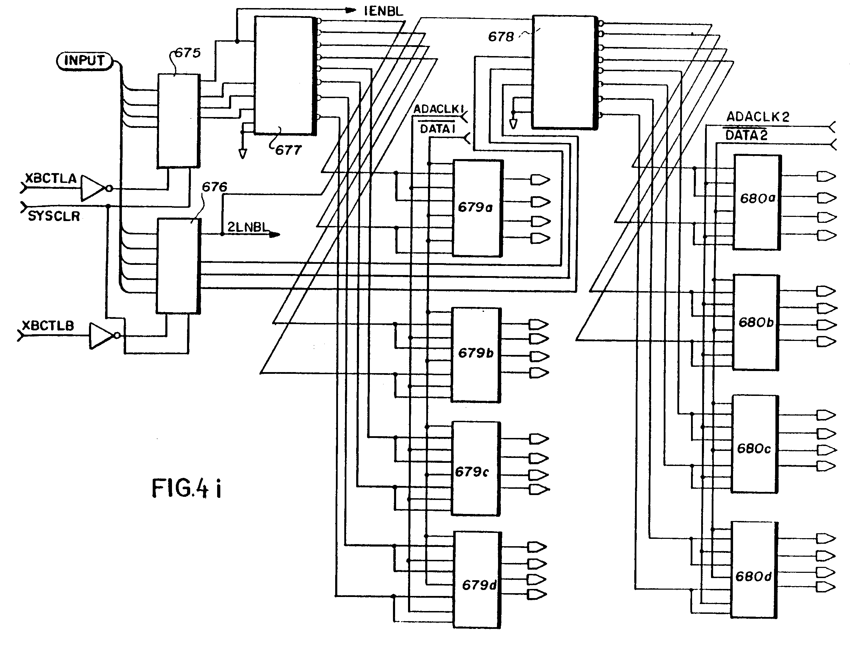

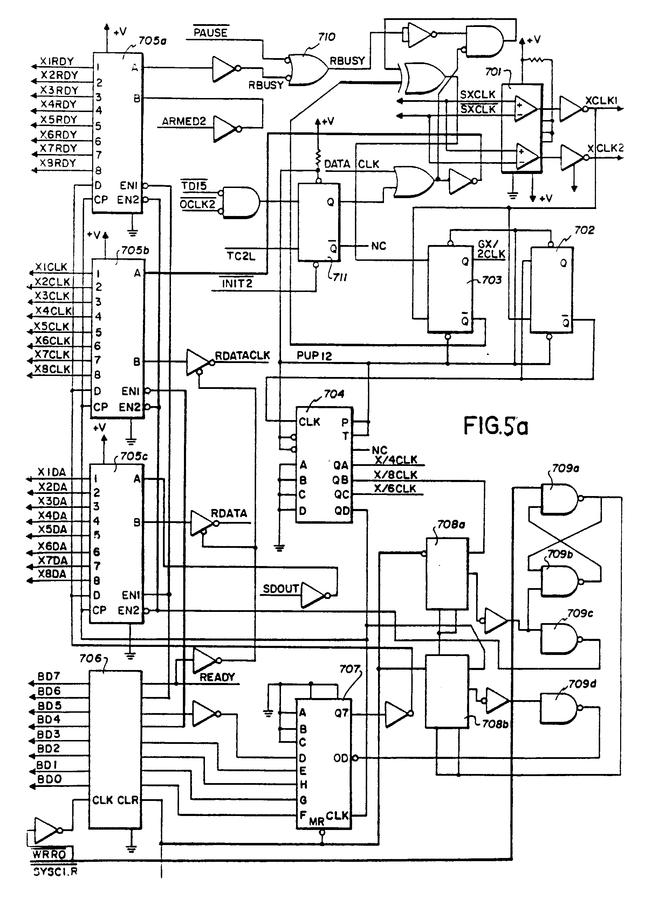

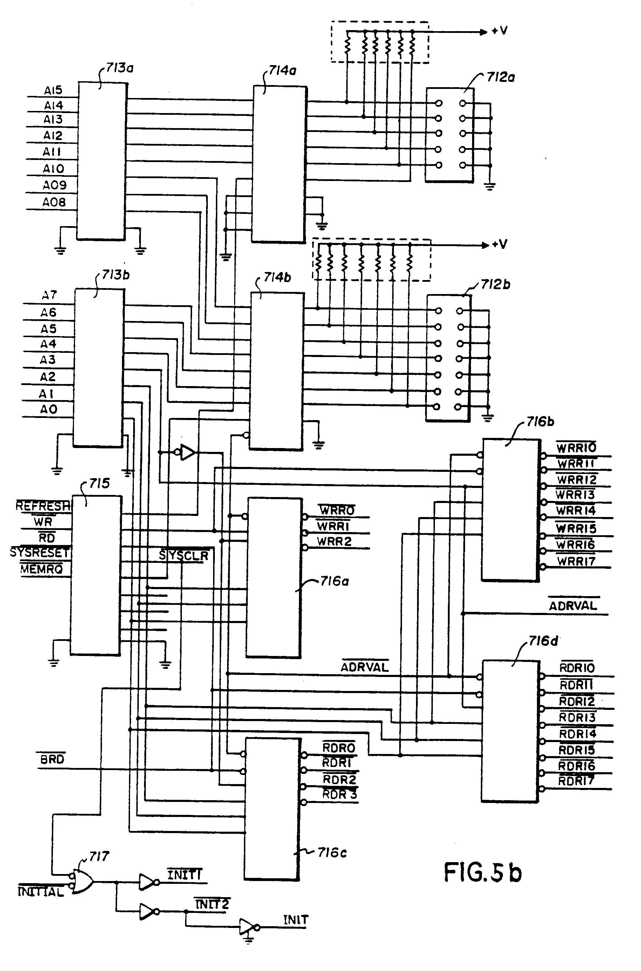

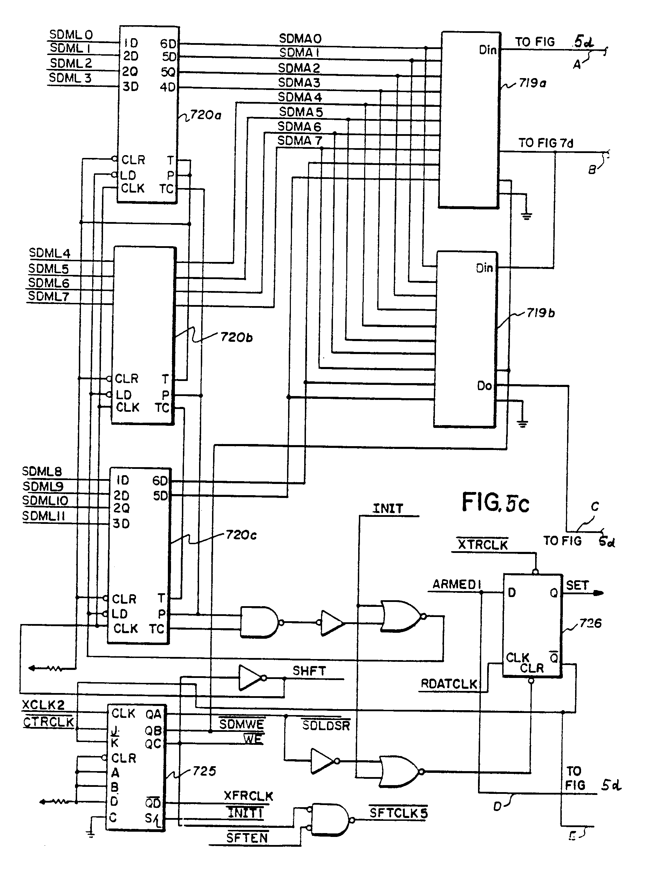

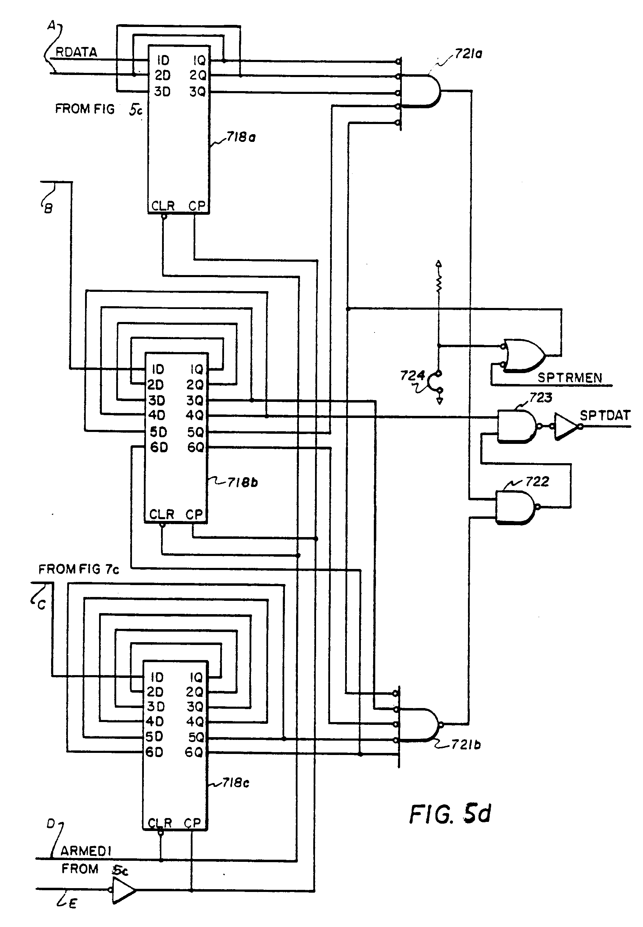

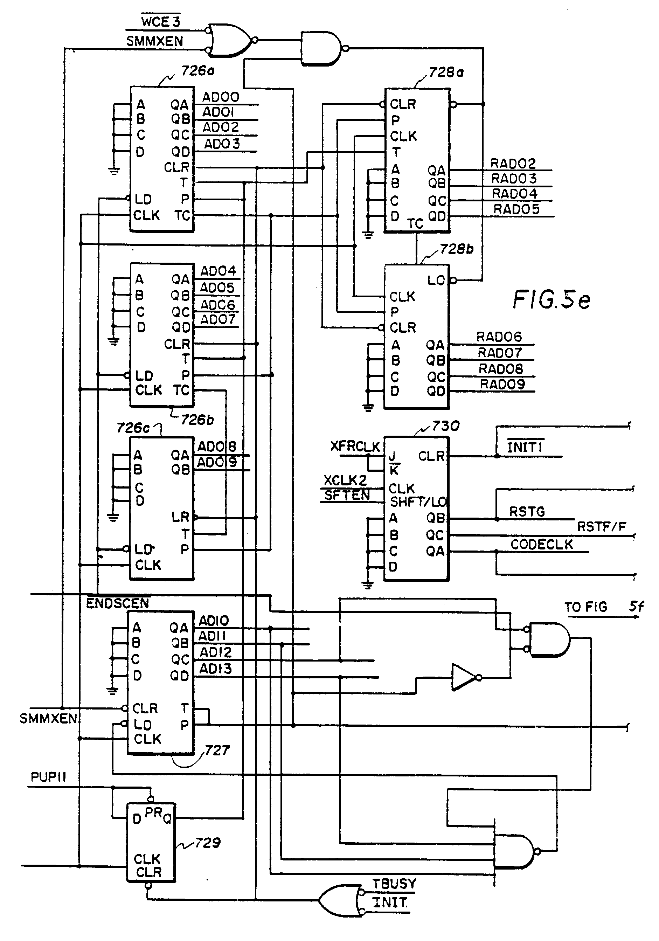

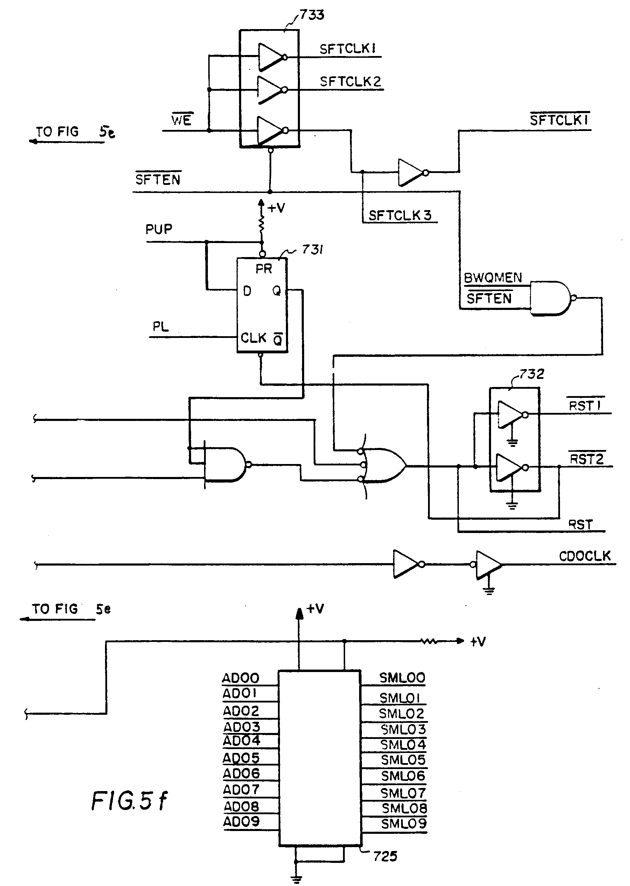

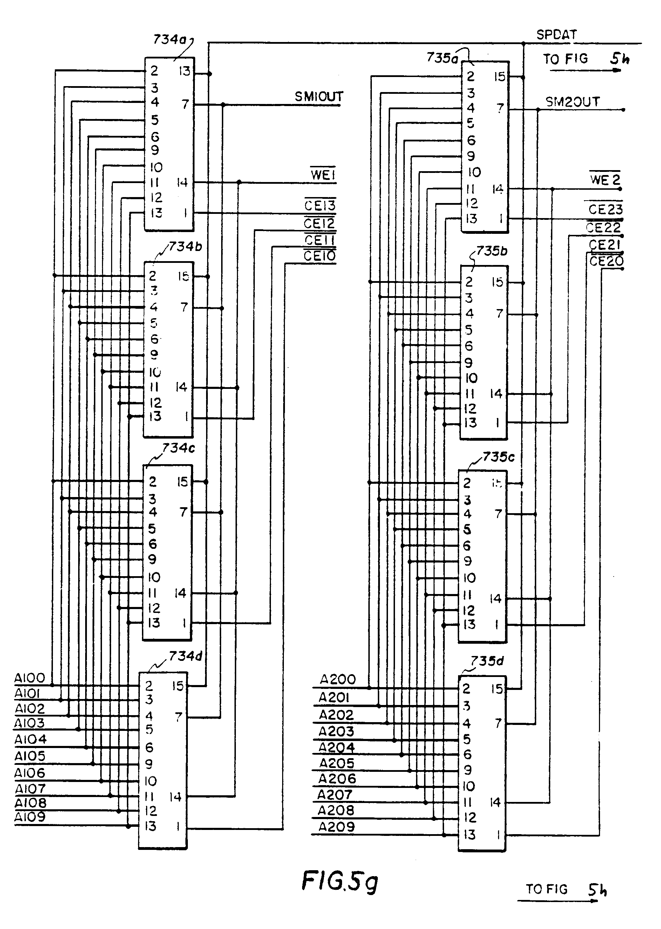

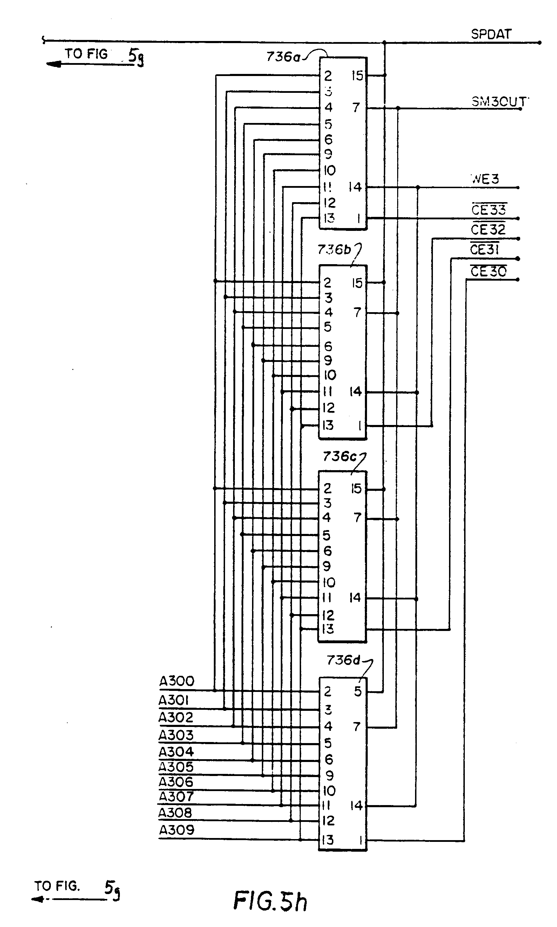

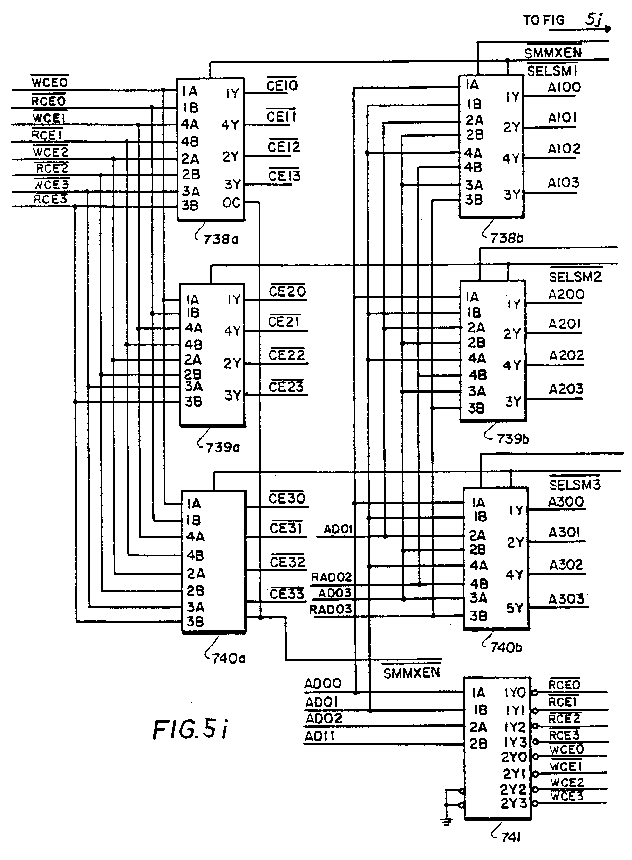

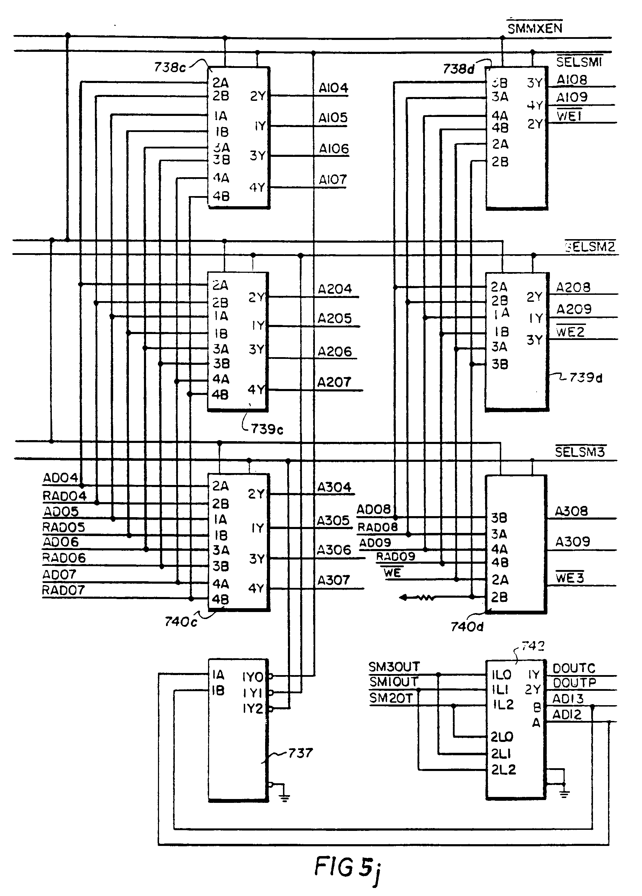

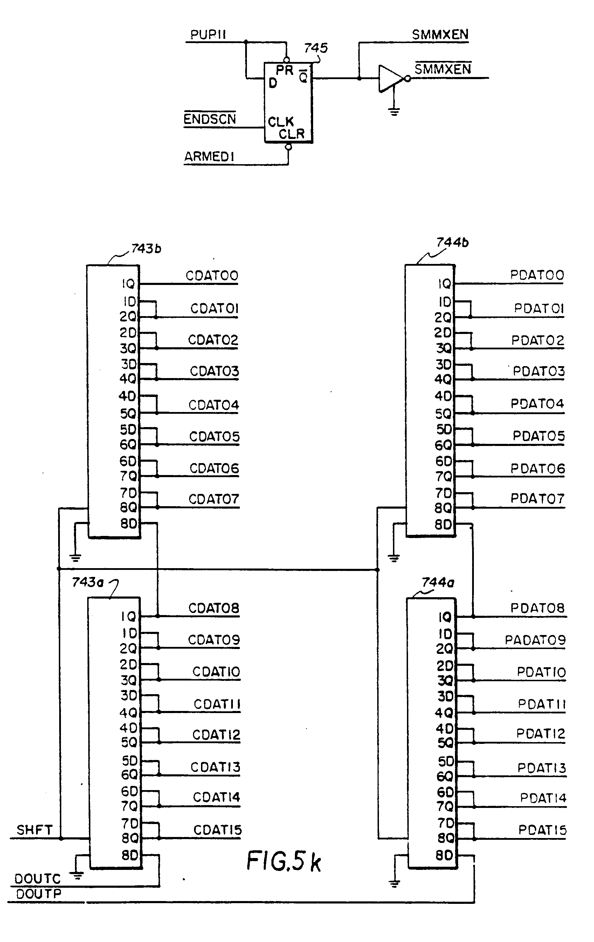

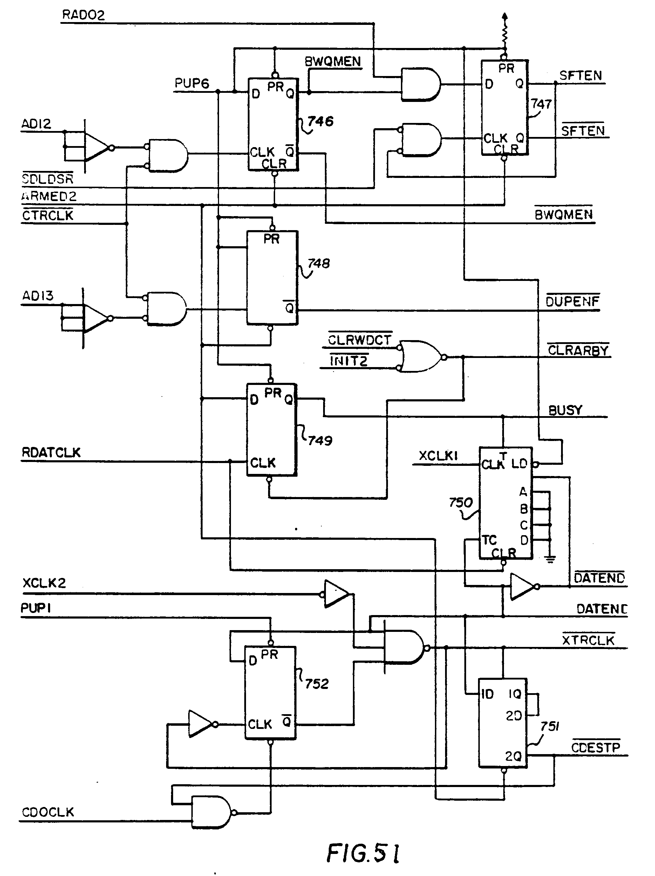

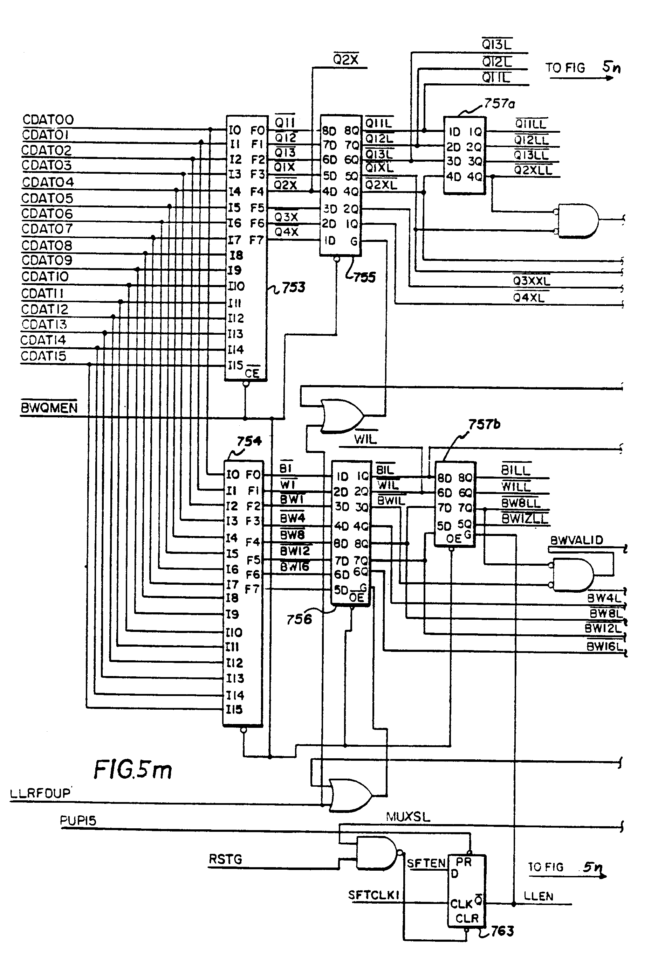

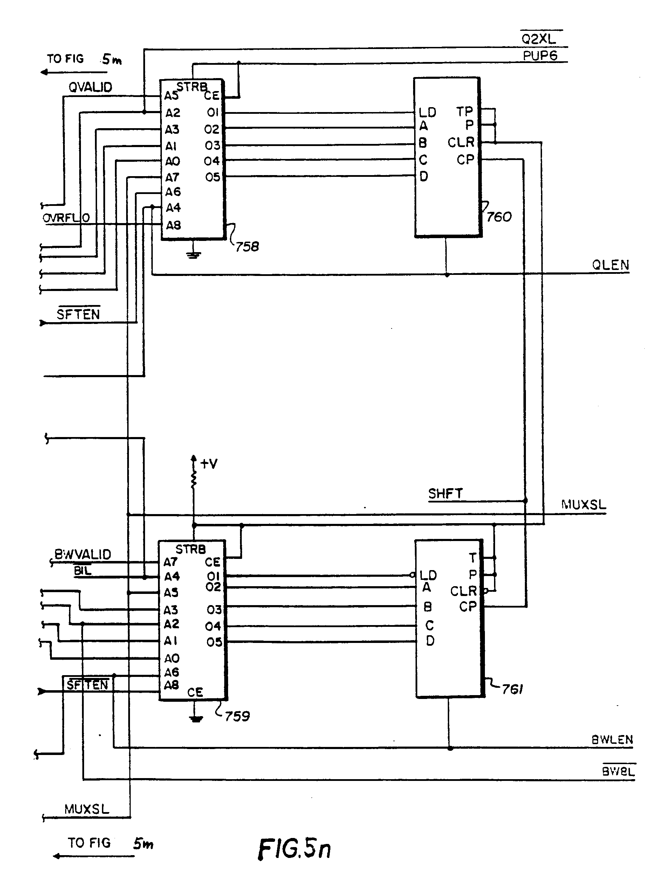

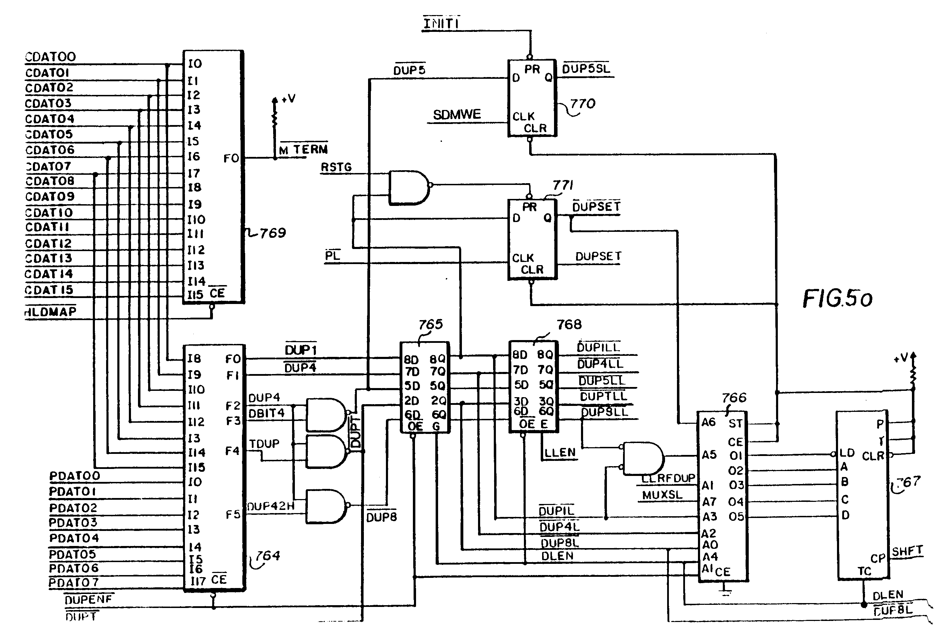

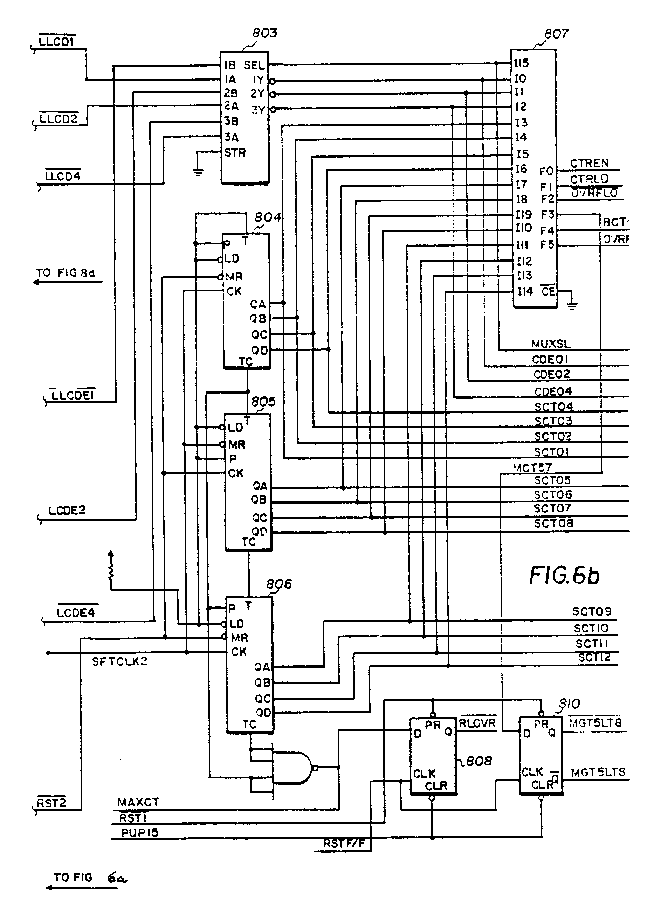

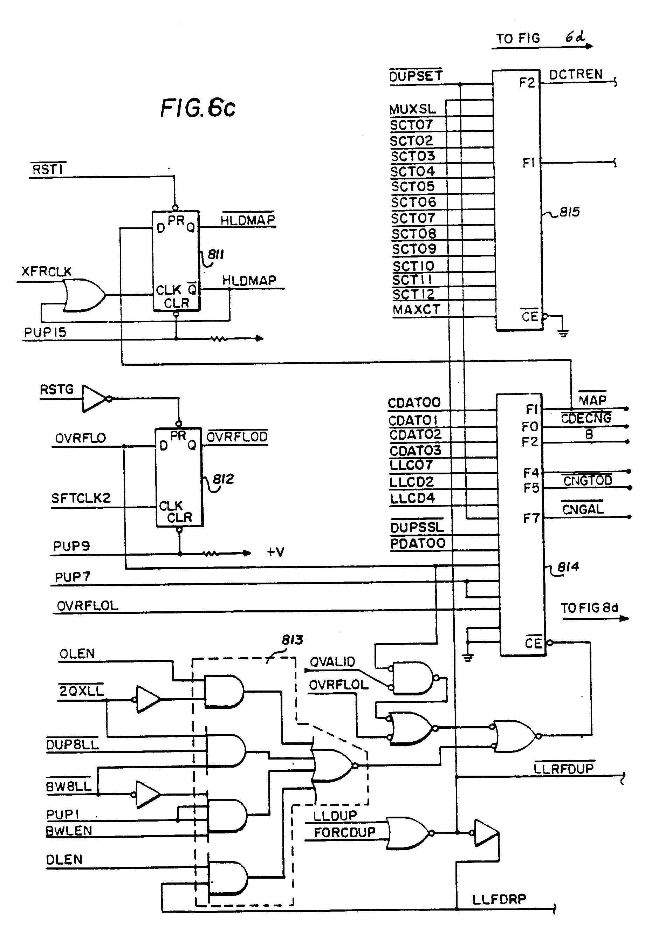

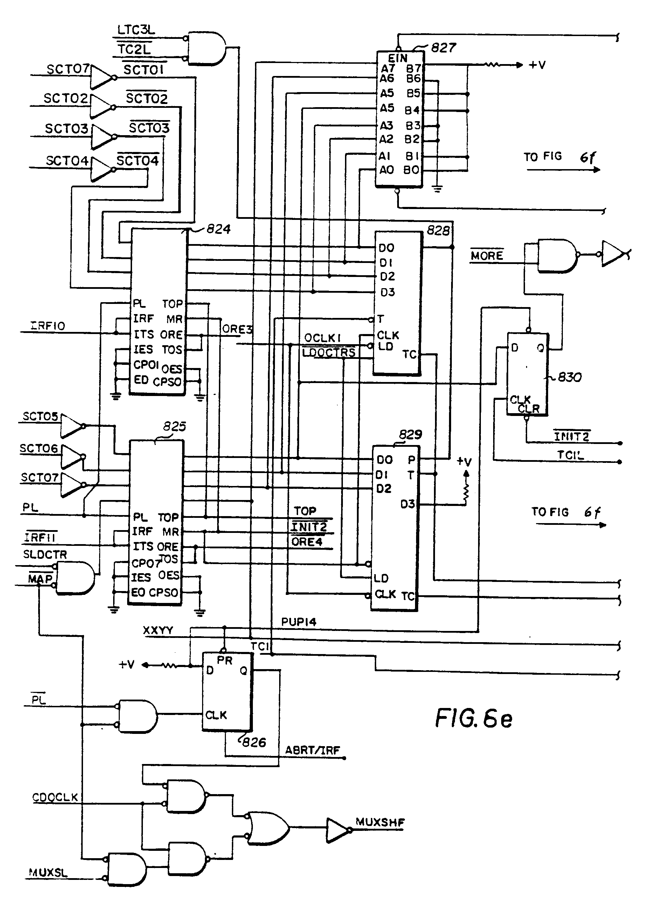

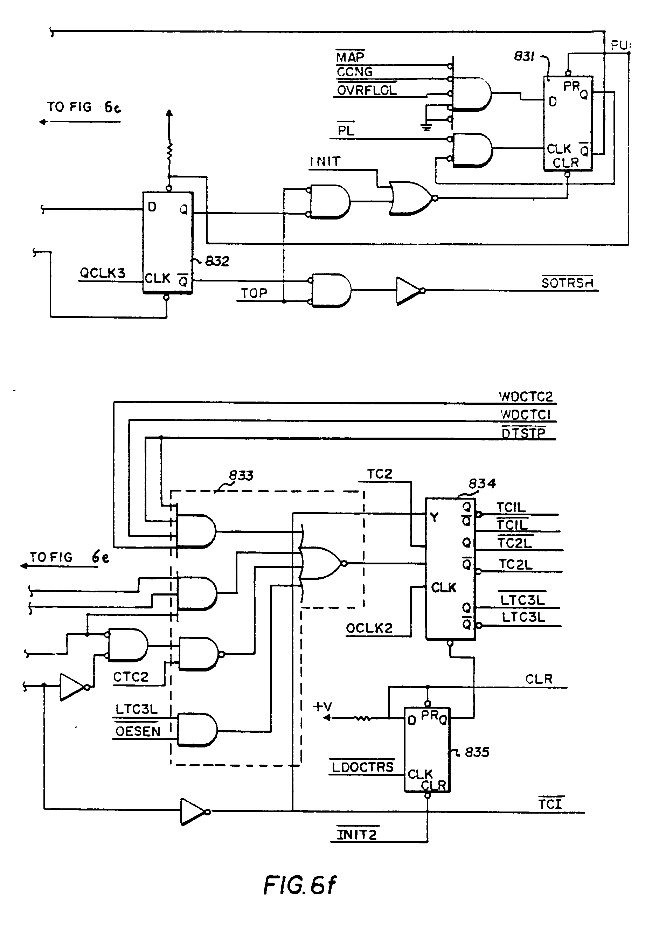

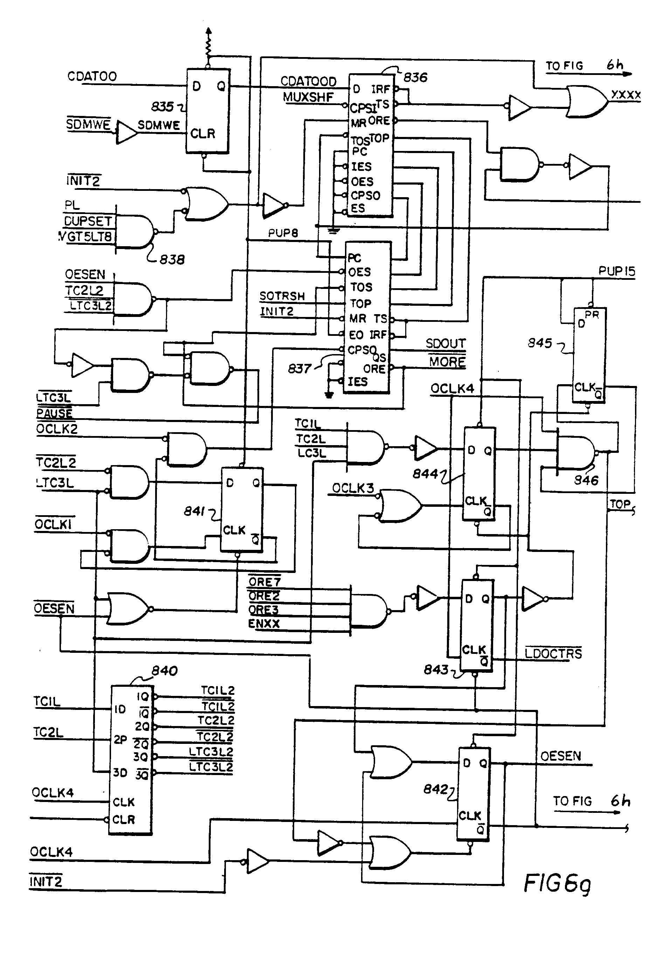

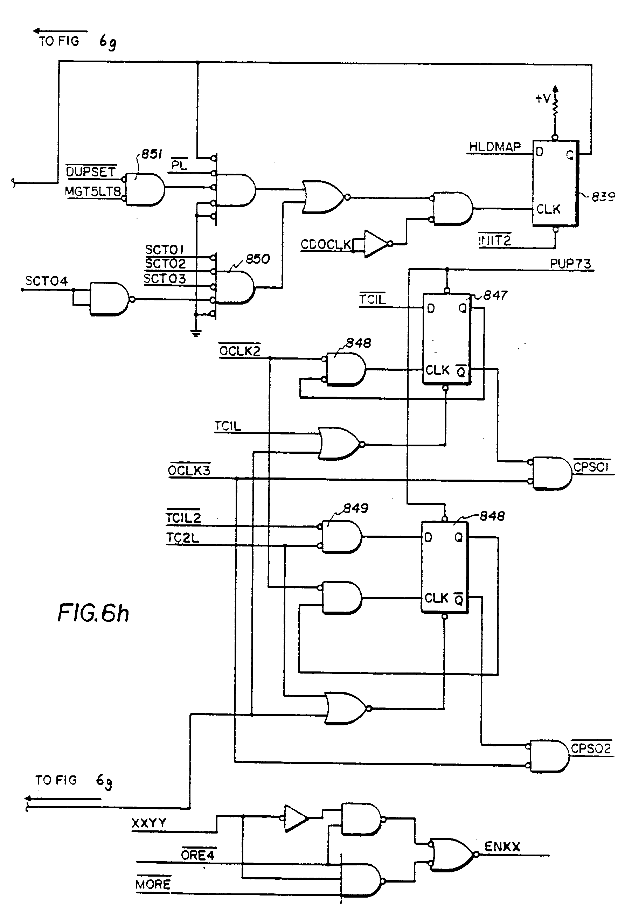

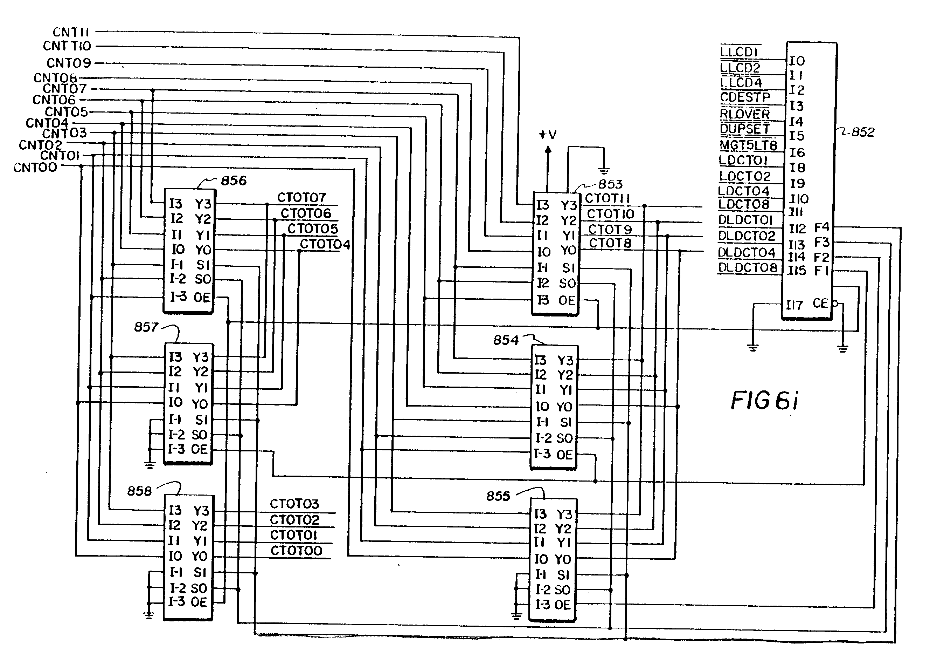

The next section in document transport 200, through which each document is transported, is camera section 226. Camera section 226 contains, in the embodiment disclosed, two digital video cameras, 228 and 234 and two illumination sources, 230 and 232. Each document which passes through camera section 226 is scanned on both sides utilizing video cameras 228 and 234. The operation of camera section 226 is explained below with reference to Figures 5 and 6.

The penultimate section of document transport 200, microfilm section 236, contains a microprocessor controlled microfilm recorder 238. Microfilm recorder 238 is utilized to provide hard copy of selected documents which have been processed by the system of this invention. Microfilm recorder 238 is capable of accurately recording documents traveling at greater rates of speed than that present in earlier sections of document transport 200, and as a consequence, the transport speed is increased in microfilm section 236 to a nominal speed of 100 inches per second. This transition is accomplished by utilizing a slipping drive at the interface between microfilm section 236 and camera section 226. Thus, while a portion of a document is still traveling at a nominal speed of 52 inches per second in camera section 226, the slipping drive (not shown) in microfilm section 236 allows the document to slip until fully released.

The final section of document transport 200 is stacker section 240. Stacker section 240, in any manner well known in the art, sorts the documents processed through document transport 200 into one of several pockets. The number of pockets is, of course a design choice wholly dependent upon the application desired.

As those skilled in the art will appreciate, the modularity of design employed in document transport 200 will allow great flexibility in many applications. Whole sections of document transport 200 may be deleted or rearranged to permit a wide variety of custom applications. Further, the number and type of devices within each module may be increased or decreased as a matter of design choice.

### VIDEO CAMERA

Figure 3 depicts a diagrammatic view of a system utilizing two video cameras 500 and illumination sources 502 whereby the image on both sides of a document may be captured. Each illumination source 502 is comprised of two 500 watt tungsten halogen bulbs, encased in a housing having cooling means and an optical focus assembly 504. Optical focus assembly 504 comprises a plurality of lenses arranged, in any manner well known in the art, to focus a vertical bar of intense light onto document plane 506. In the embodiment disclosed, the vertical bar is generally rectangular in shape and is approximately six inches tall and one tenth of an inch wide. As discussed above, documents are transported laterally across this illuminated portion to enable video image capture.

The light reflected from each document passes through each camera lens assembly 508 and is focused on line scanner 510. Camera lens assembly 508 is a fixed magnification ratio lens typically utilized in fixed working distance applications such as photographic enlargers. Line scanner 510 is a high density, monolithic, linear array of silicon photodiodes with integrated scanning circuits for serial readout. The array, in the embodiment disclosed, consists of a row of 768 silicon photodiodes, having a storage capacitor associated therewith upon which may be integrated the photocurrent, and a transistor switch for periodic readout via an integrated scanning circuit. The individual photodiodes of line scanner 510 are one mil square and are spaced center-to-center, one mil apart.

During image capture, a document is transported laterally across the vertical bar of light generated by each illumination source 502. Each camera lens assembly 508 focuses the reflected light from the document onto line scanner 510. Each of the 768 silicon photodiodes contained within line scanner 510 produces an electrical signal which is proportional to the intensity of the incident light. The photodiodes are then sampled at a high rate, the line scanner utilized in the preferred embodiment may be sampled at frequencies as high as ten megahertz. The combination of the lateral motion of the document and the vertical action of sequential sampling of the photodiodes in line scanner 510 will produce a two dimensional picture of a document with a resolution within .007 of an inch.

The output of line scanner 510 is amplified and coupled to additional circuitry as a series of pulses wherein the area of each pulse is proportional to the intensity of the incident light on each photodiode. This series of pulses is utilized in the camera control circuitry to sense the presence of a document and to dynamically adjust the threshhold level utilized to determine whether a particular value is white or black. The series of pulses is also applied to the data compression system for compression, storage and subsequent retrieval.

### CAMERA BUFFER AND INTERFACE CIRCUITRY

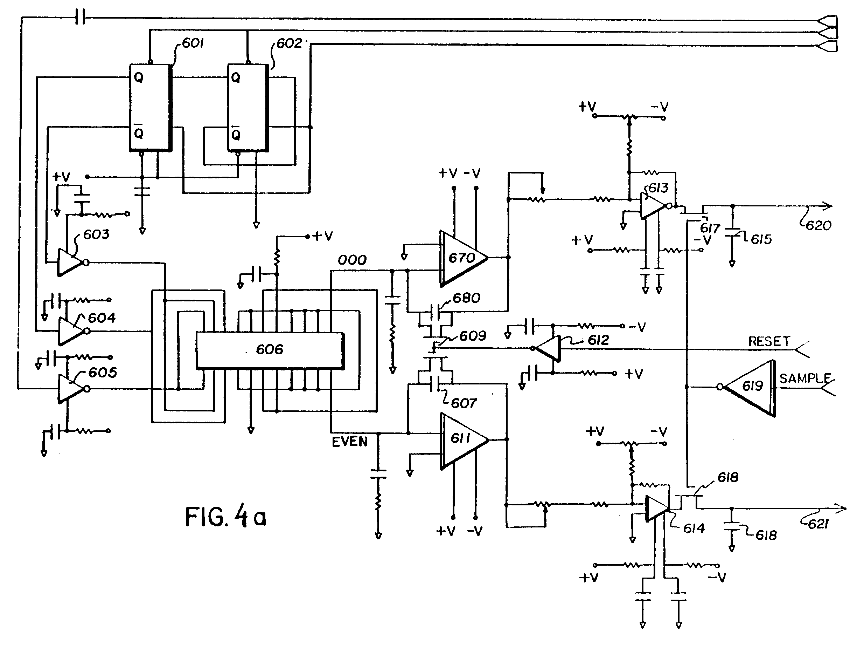

With reference now to Figures 4a-4i, there is depicted a schematic view of the major components of the camera buffer and interface circuitry of the document processor. While the disclosed embodiment utilizes two video cameras, in many cases only one set of buffer and interface circuitry will be depicted. Those ordinarily skilled in the art will appreciate the simple duplication of circuitry necessary to accomodate two video cameras.

Referring now to Figure 4a, oscillators 601 and 602 are utilized, in conjunction with the basic clock signal (30.5 megahertz in a preferred embodiment) to provide the scanning pulses to line scanner 606. Oscillators 601 and 602 are implemented, in a preferred embodiment of the present invention, utilizing standard 74S74 type flip-flop integrated circuits. The control pulses necessary to operate line scanner 606 are applied via amplifiers 603, 604 and 605, which are utilized to provide level adjustments. Line scanner 606, in the illustrated embodiment, is an integrated circuit. Additional details concerning the construction of line scanner 606 are disclosed above with respect to the video camera description. Line scanner 606 is scanned at a parallel rate of three megahertz. That is, the odd numbered cells in line scanner 606 are scanned at a three megahertz rate and the even numbered cells are also scanned at a three megahertz rate. Thus, line scanner 606, with proper multiplexing of the dual outputs, is capable of generating video pulses at a six megahertz rate.

Even cell and odd cell outputs of line scanner 606 are applied to amplifiers 611 and 610 respectively. Amplifiers 611 and 610, in conjunction with capacitors 607 and 608, are utilized to capture the output of each individual scan cell. Switching transistor 609 is utilized to alternately remove all charge accumulated on capacitors 607 and 608 between sampling times for adjacent cells of line scanner 606. The RESET signal accomplishes this and is applied to switching transistor 609 through inverter 612.

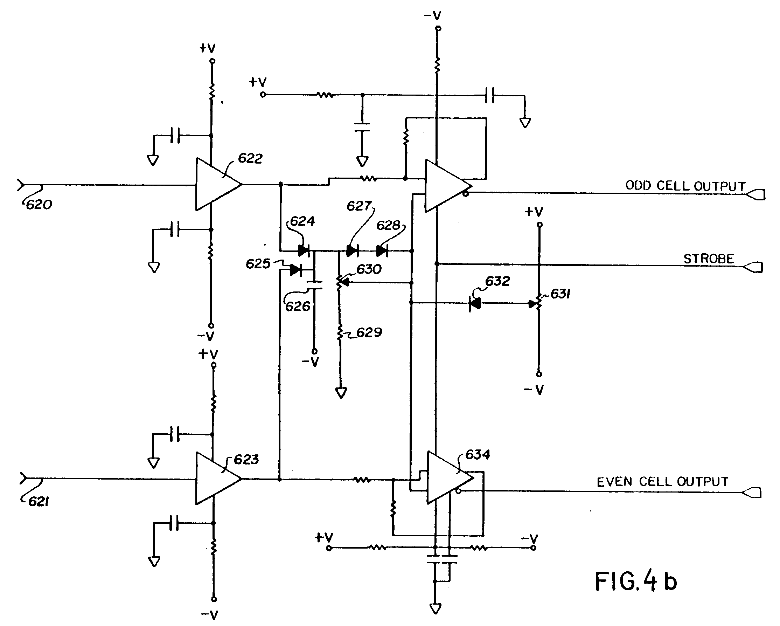

The outputs of amplifiers 610 and 611, representing the relative charge present on capacitors 608 and 607 during each cell scan, are further amplified by amplifiers 613 and 614, in a manner well known in the art. The outputs of amplifiers 613 and 614 are next applied to two sample and hold circuits. The sample and hold circuits are comprised of switching transistors 617 and 618 and storage capacitors 615 and 616. Thus, the charge present on capacitors 615 and 616 is indicative of the amount of light striking the corresponding scanning cells of line scanner 606 at any selected time. The signals are then coupled, via lines 620 and 621 to a final stage of amplification, consisting of amplifiers 622 and 623 (see Figure 4b).

With reference now to Figure 4b, the outputs of amplifiers 622 and 623 are each applied to two points within the dynamic threshold circuitry. Dynamic threshold adjustment is an important feature of the document processing system of the present invention and allows a single system to process multicolored documents without requiring individual level adjustments.

The output of amplifier 622, representing the amplified outputs of the odd numbered cells of line scanner 606 (See Figure 4a) is applied to one input of comparator 633 and to diode 624. Similarly, the output of amplifier 623, representing the amplified outputs of the even numbered cells of line scanner 606, is applied to one input of comparator 634 and to diode 625.

Diodes 624 and 625 perform an OR function and apply the more positive of their individual inputs to capacitor 626. Capacitor 626 is, therefore, rapidly charged to the level of the highest signal applied through diodes 624 and 625. This level is the "white" threshold and represents a reference point for black/light decisions. The voltage level present on capacitor 626 is applied through diodes 627 and 628 to the second input of comparators 633 and 634. The voltage drop across diodes 627 and 628 assures that the signal creating charge on capacitor 626 will be greater than the resultant reference signal applied to comparators 633 and 634.

The charge present on capacitor 626 will eventually discharge slowly through resistors 629 and 630; however, a reference voltage applied through diode 632 will prevent total discharge and will apply a minimum level which a cell output must exceed in order to be considered "white." Additionally, the time constraints associated with capacitor 626 and resistors 629 and 630, while chosen to be "slow" with respect to individual cell sample times, are sufficiently "fast" to allow discharge of capacitor 626 between adjacent documents. Thus, a totally white background document, while in process, will result in a high reference signal being generated on capacitor 626, and result in any signal greater than two diode drops below that level being characterized as "black." However, during the gap between documents, capacitor 626 will discharge sufficiently so that a colored background document (blue, for example) will generate a lower reference level. This system of dynamic reference adjustments allows a single system to process an entire variety of multihued documents without system adjustment, and without the possibility of losing all data contained on a relatively dark background document.

For reasons of circuit design not important to the concept, an inverted output is selected from comparators 633 and 634. Therefore, a particular cell in line scanner 606 which detects a "black" area will result in a logic 1 or "high" output of the appropriate comparator, and a cell which detects a "white" area will result in a logic 0 or "low" output from the appropriate comparator.

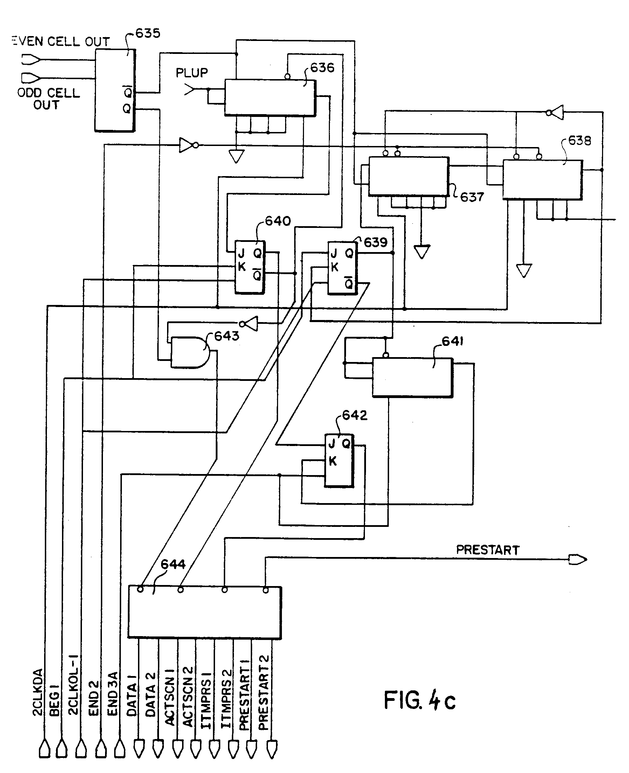

Referring now to Figure 4c, the document detection circuitry of the document processor is depicted. The odd and even numbered cell outputs from comparators 633 and 634 (See Figure 4b) are applied to shift register 635. Shift register 635 multiplexes the dual three megahertz signals into a single six megahertz video signal. One output of shift register 635 is applied to shift register 636. Shift register 636 is loaded each time a "black" cell is detected and shifts each time a "white" cell is detected. After eight consecutive "white" cells have been detected, the output of shift register 636 is shifted out and sets latch 640. Latch 640 is a simple JK type latch and is utilized to generate the signal which indicates the scan is active (ACTSCN1).

The output of shift register 635 is also applied to counters 637 and 638. Counters 637 and 638 are the leading edge detectors and are reset at the end of each scan through line scanner 606. Counters 637 and 638 are utilized to count "white" cells in a single scan. If sixty-four "white" cells are detected in a single scan, counters 637 and 638 set latch 639. Latch 639 is also a simple JK latch and is utilized to set edge detection latch 642.

The ouput of edge detection latch 642 is utilized to generate the signal which indicates a document is present (ITMPRSl). The output of latch 639 is also applied to counter 641.

Counter 641 is the trailing edge detector. Counter 641 is utilized to count the number of complete scans in which less than sixty-four "white" cells are detected. If sixteen such scans are counted, the output of counter 641 is utilized to reset edge detection latch 642. Header 644 is merely a connection means to allow compatability between systems which utilize a single video camera and systems which utilize two video cameras.

Figure 4d depicts a series of counters and registers utilized to provide operating information to a controlling microprocessor type device. Counters 645a-645f are utilized to count the total number of active cells in a particular document. The number counted is latched into registers 646a-646c and is available upon query by the control device. Similarly, in applications utilizing two video cameras, counters 647a-647f are utilized to count the total number of active cells in the second side of a particular document and registers 648a-648c store the total count.

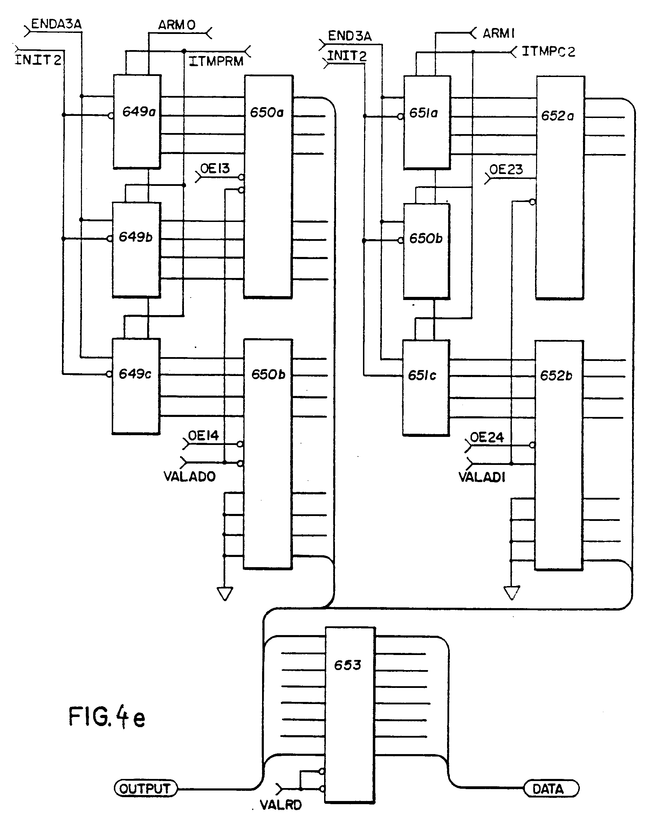

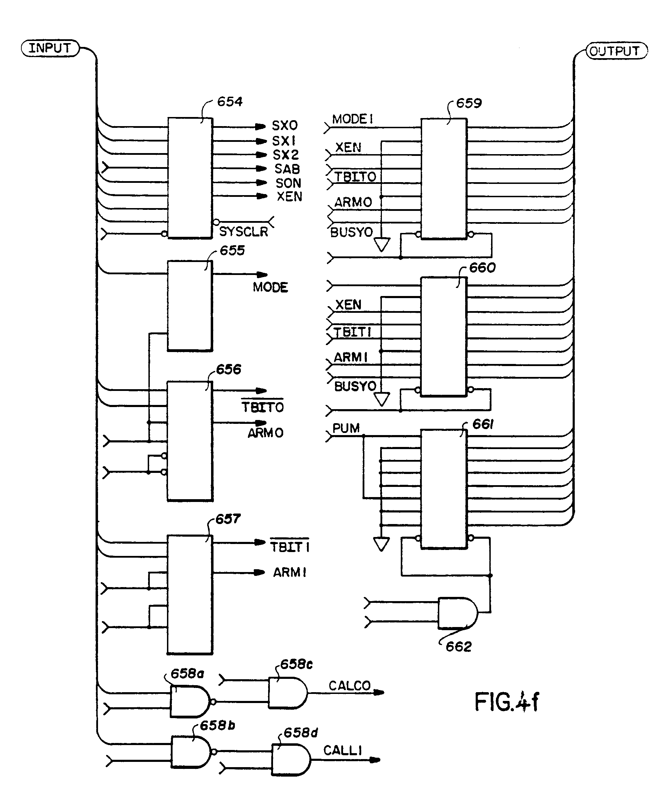

Figure 4e depicts further counters and registers used to provide operating information. Counters 649a-649c count the total number of lines scanned in a particular document and latch that number into registers 650a and 650b. Similarly, counters 651a-651c are utilized to count the total number of lines scanned by the second camera and that number is latched into registers 652a and 652b. Thus, by knowing the total number of cells and the total number of scans, a control device may simply divide to calculate the exact dimensions of a particular document.

Also depicted in Figure 4e is bus driver 653. Bus driver 653 is utilized to drive or amplify data being read from any of the interface registers to permit transmittal to a microprocessor type control device.

Referring now to Figure 4f, there is depicted a series of input and output latches utilized to provide communications to and from a microprocessor type control device. Latches 654, 655, 656 and 657 are utilized to latch in information from the control device to the system. Information and/or commands that test, clear or arm the system are received and latched into the appropriate latch. Information received may be utilized to appropriate commands, such as depicted with logic gates 658a-658d.

Information, device identification, returning test data and busy indications may be latched into latches 659, 660, 661 or logic gate 662 for access by a control device.

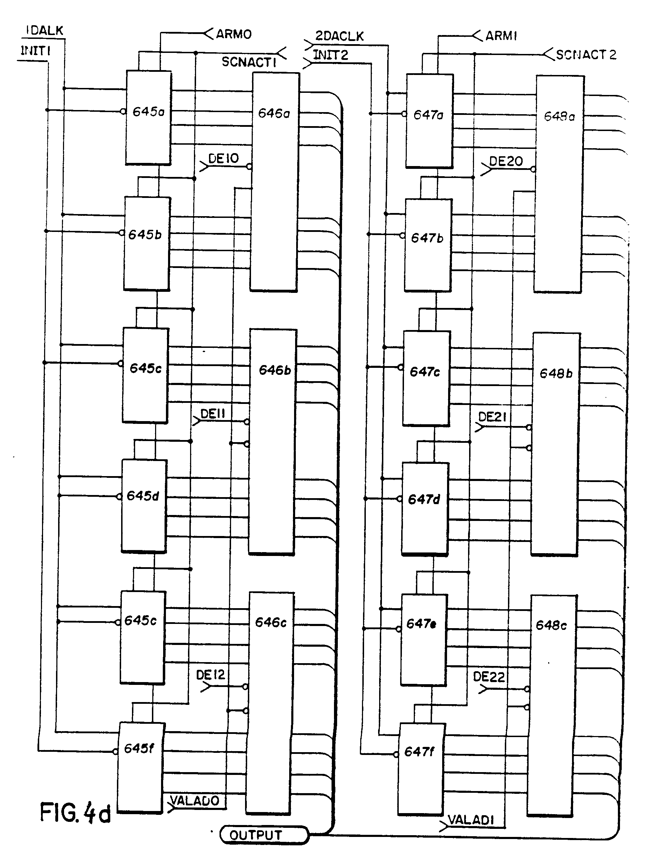

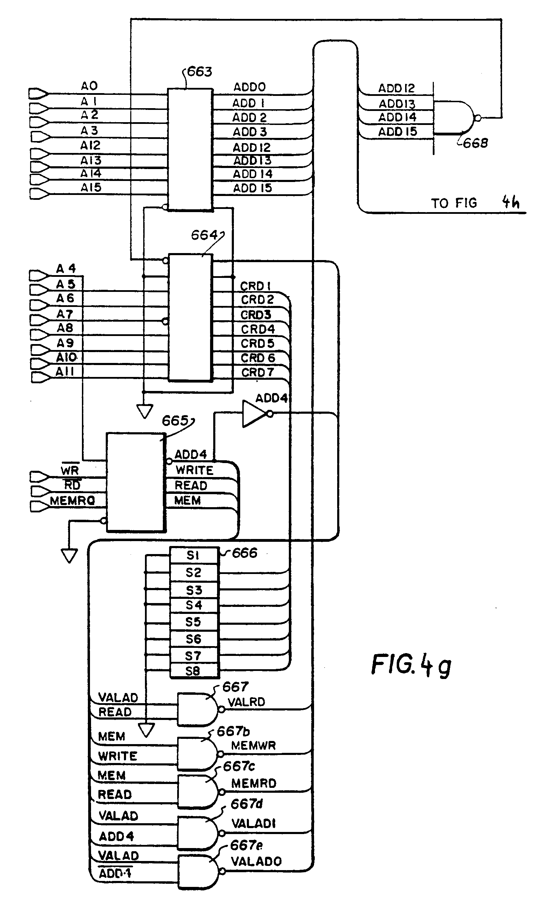

With reference now to Fig 4g, there is depicted additional address and control circuitry. Switch 666 is a multiple position DIP switch which may be set in a unique pattern to specifically identify a particular transport and camera, recalling that a system may include additional transports as a matter of design choice. The positions of the various switches in switch 666 are coupled to comparator 664 for comparison with the eight address bits generated by the microprocessor type control device. Thus, it is possible for the control device to accurately address a single one of a plurality of devices. If comparator 664 indicates an address match, a valid address signal (VALAD) is generated.

Once a valid address has been detected, the first four bits of address, A0, A1, A2 and A3 are utilized to address up to a maximum of sixteen addressable registers on the addressed device. Bus driver 633 is utilized to couple these address bits to the addressable registers. Bus driver 665 is utilized to couple control commands and the A4 address bit. The A4 address bit is utilized, in the illustrated embodiment, in conjunction with the valid address signal, to designate either of two video cameras, utilizing logic gates 667d and 667e. Logic gates 667a-667c are utilized in conjunction with other decoded commands to generate internal read and write commands.

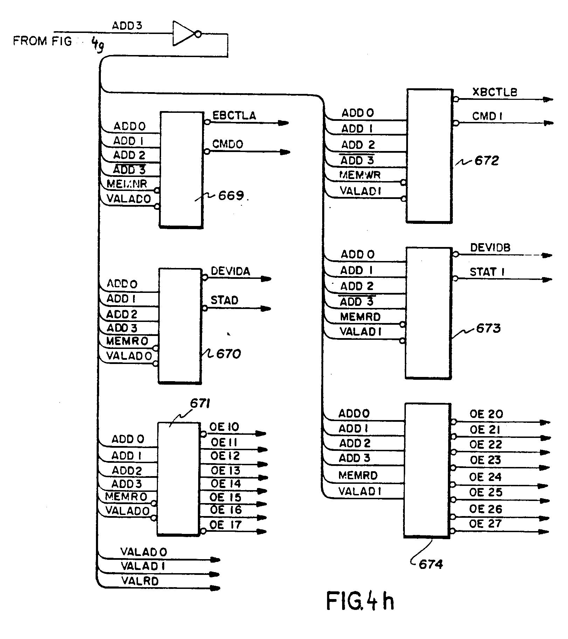

Referring now to Figure 4h, there are depicted six decoders utilized to decode command and address information from the control device. Decoders 669 and 672 are utilized during a memory write command to either video camera. Decoders 670 and 673 are utilized when the control device issues a memory read to either camera. Decoders 671 and 674 decode the commands which access the total cell number and total scan number registers depicted in Figures 4d and 4e.

Finally now, with reference to Figure 4i, there is depicted the output circuitry associated with the video camera of the present invention. The depicted embodiment of the present invention utilizes eight separate video buses to transmit video data between various components of the system. This group of buses is collectively referred to as the X bus, and any single bus may be selected for any single device to utilize.

Control signals from the control device are decoded utilizing decoders 675, 676, 677 and 678. The outputs of decoders 677 and 678 are utilized to enable selected three state buffers. Three state buffers 679a-679d, in the illustrated embodiment, will couple the data from one camera to one of four video buses, while three state buffers 680a-680d will couple the data from a second camera to one of the four remaining video buses.

### DATA COMPRESSION SYSTEMS

With reference now to Figures 5 and 6, there is depicted a schematic representation of the circuitry of the data compression system in accordance with the present invention.

Referring now to Figure 5a, the system clock and its complements are applied to the inputs of high speed differential comparator 701, which acts as a high speed line receiver. In the disclosed embodiment, the system clock is a 30.5 megahertz signal generated utilizing a crystal controlled oscillator (not shown). The output of comparator 701 is applied to multivibrators 702 and 733, where the frequency is halved in a manner well known in the art.

The output of multivibrator 702 is applied to four bit binary counter 704, where the halved clock frequency is further divided into lower frequencies which are utilized throughout the system.

Cross point switches 705a, 705b and 705c are utilized by a microprocessor type control device to select one of eight bus lines to be coupled to the data compression system. As previously mentioned, the eight line bus referred to as the X bus is comprised, in one embodiment of the present invention, of eight three wire bus lines. Each bus line has a ready line, a clock line and a data line. The particular bus selected by cross point switches 705a, 705b and 705c is controlled by bus control register 706, in response to commands from a microprocessor type control device.

Bus control register 706 is utilized to control cross point switches 705a, 705b and 705c in conjunction with shift register 707. Shift register 707 is a parallel in-serial out (PISO) register which is utilized to serialize the command data from register 706 and couple that serialized command data to set up the cross point switches.

Shift registers 708a and 708b are utilized in conjunction with logic gates 709a, 709b, 709c and 709d to enable cross point switches 705a, 705b and 705c and to control register 706 when data is being written into register 706. By controlling data into register 706 and the clocking of that data out of shift register 707, the operation of the cross point switches is carefully sequenced.

In the event, that the selected X bus line is occupied, or when a pause signal indicates that incoming data must temporarily stop, circuitry is present which will cease data input to the data compression system. A not ready condition out of cross point switch 705a or an internally generated pause signal at the input of NOR gate 710 will generate a signal (RBUSY) which will stop the operation of multivibrator 703, and thence the operation of the output section.

Also depicted in Figured 5a is end of data clock 711. Clock 711 is a simple multivibrator which is utilized to generate the end of the output data signal.

Referring now to Figure 5b, there is depicted the circuitry by which the microprocessor type control device may accurately address the data compression system and various registers within the data compression system.

Jumper wire switches 712a and 712b are utilized with various jumper wires to provide a unique address for the data compression system. Buffers 713a and 713b are utilized to receive a board address and register address from the control device. Each board may contain up to sixteen separate addressable registers (or thirty-two including read only and write only registers) and therefore four bits of address A0-A3 are utilized to select a register.

The remaining address bits are coupled to comparators 714a and 714b where they are compared to the address of the data compression system board, as determined by the placement of jumper wires in jumper wire switches 712a and 712b.

Control signals from the control device are coupled to buffer 715 and one of eight decoders 716a-716d are utilized to decode the selected register address to determine which register will be read or written to by the current command.

Logic gate 717 is utilized to receive the INITIAL signal and is utilized to generate the signals which initialize various other portions of the data compression system.

Figures 5c and 5d when placed side by side in the manner indicated in those two figures, depict a schematic representation of the "spot remover" circuitry of the data compression system of the present invention. The spot remover circuitry is utilized to remove any single black "spot" from the data which corresponds to a particular image. A spot is defined for these purposes as a single black cell detected by line scanner 606 (see Figure 6), that is surrounded by white cells.

Referring now to Figures 5c and 5d, the data stream representative of a scan through a document is coupled to an input of register 718a and then out of register 718a and into delay register 719a. Delay register 719a is, in a preferred embodiment, a 1024 bit random access memory that is utilized in the manner of a long shift register.

The data out of register 718a is written into delay register 719a at an address determined by address generators 720a-720c. Address generators 720a-720c are initially loaded to a number which correlates with the number of cells in each scan for a particular document or group of documents. Address generators 720a-720c are four bit counters which are utilized to control the addresses in delay registers 719a and 719b. Thus, the data from register 718a is written into an address of delay register 719a which will result in the leading edge of data exiting delay register 719a at the end of each scan.

The data exiting delay register 719a is coupled to register 718b and to the input of delay register 719b. As above, the data in delay register 719b is delayed for the length of a scan and is then coupled to register 718c. Those skilled in the art will appreciate that this configuration will result in a sample of the current scan being present in register 718a, a sample of the previous scan being present in register 718b, and a sample of the next previous scan being present in register 718c.

It is therefore a simple matter to examine the surrounding cells, utilizing logic gates 721a and 721b, and to determine whether or not a particular black cell is a "spot" that should be removed. Logic gate 723 compares the single cell with the surrounding cells and generates the signal which removes the spot. Wire jumper 724 is provided to allow the spot remover circuitry to be disabled, if that is desired in a particular embodiment.

Register 725 is a four bit, parallel access shift register which is utilized, in conjunction with flip-flop 726, to generate write enable signals and various system clock signals.

With reference now to Figures 5e and 5f, which when placed side by side in the manner indicated in the drawings, depict the scan memory address circuitry. The data associated with a plurality of adjacent scans through a document must be stored and examined to permit data compression, and such storage must be accomplished in a precise manner to permit later synthesis of a document image. In order to accomplish this storage in an orderly fashion, the number of scans and the number of cells in each scan must be carefully tracked.

Comparator 725 in Figure 5f is utilized to compare the number of cells in each scan with an incremented address. The number of cells in each scan is loaded into the data compression system, by a control device, through registers which are not shown. The incremented address which controls the storage location of incoming data is generated by scan memory address generators 726a, 726b and 726c. Address generators 726a, 726b and 726c are four bit binary counters which are initialized and then utilized to count to an address which corresponds to the number of cells in each scan as determined in comparator 725. When the address thus generated is equal to the number of cells in a scan, the process is repeated.

Each time comparator 725 detects the end of a scan, the output signal is coupled to scan counter 727. Scan counter 727 is utilized to keep track of the number of scans stored, because, as will be explained below, the data compression system of the present invention operates with twelve scans in temporary storage in scan memory.

Read address generators 728a and 728b are utilized to generate the addresses which will be utilized to read the scan data from temporary storage in the scan memory. A separate read address generator is necessary because as will be explained herein, the scan data in temporary storage is read out of the scan memory in a different order than the order in which it was stored.

Multivibrator 729 is utilized to initiate the address generators and read address generators at the beginning of operation. Parallel access shift register 730 and multivibrator 731 are utilized to develop various clocks and reset commands utilized to operate the data compression system of the present invention. Buffers 732 and 733 are utilized to buffer and isolate the clocks and reset signals so generated.

Figures 5g and 5h, when positioned side by side in the manner indicated in the figures, form a schematic diagram of the scan memory previously discussed. Each of the memory blocks depicted, 734a-734d, 735a-735d and 736a-736d are implemented utilizing a 1024 bit random access memory. Thus, each memory block may temporarily store one complete scan through a document, recalling that a scan may consist of up to seven hundred and sixty-eight separate cells of line scanner 606 of Figure 4. Further, the scan memory formed by the combination of memory blocks 734a-734d, 735a-735d and 736a-736d may temporarily store twelve individual scans.

Figures 5i and 5j, when positioned as indicated in the figures, form a schematic diagram of the address multiplex circuitry of the scan memory of the present invention.

Address multiplex circuitry is necessary because, although the data obtained from line scanner 606 (Figure 4) is obtained and written into temporary storage in the scan memory in a vertical format (with respect to the document image), experimentation has shown that maximum data compression will occur with analysis of that data in a horizontal format.

As previously discussed, the scan memory formed by memory blocks 734a-734d, 735a-735d and 736a-736d (Figures 5g and 5h) form temporary storage for twelve complete vertical scans. The data within the scan memory is analyzed horizontally in groups of four scans. Therefore, the twelve memory blocks are further broken down into three groups, two of which are being read while the third group is being written into.

The two groups being read are referred to as the current data and previous data. The previous data represents the previous four scans prior to the current four scans read into the system and is maintained in temporary storage to determine what, if any, relationship exists between that data and the current data. This examination is necessary to detect possible redundancies which may be removed and replaced with coded equivalents.

The described system of vertical writing and horizontal reading requires address multiplexing to insure proper operation. Consider the subgroup of four memory blocks into which data is being written. A memory block is enabled, an address is supplied from scan memory address generator 726a-726c (Figure 5e), and the address is incremented until comparator 725 (Figure 5f) indicates the address has reached the end of the number of cells in a scan. Next the memory block enable signal is incremented, the address generators are initialized and the process is repeated until four scans are written into the scan memory.

When a subgroup of the memory blocks is being read, an address is generated by read address generators 728a and 728b (Figure 5e) and the memory block enable signal is incremented through a four count. Next, the address is incremented and the memory block enable signal is incremented through the four memory blocks in the subgroup.

Decoder 737 acts as a one of three decoder which enables one of the three subgroups of the scan memory at a time. A subgroup of memory is enabled utilizing address multiplexers. The first subgroup utilizes address multiplexers 738a-738d. Each address multiplexer is a quad two line to one line multiplexer. Address multiplexer 738a is utilized to provide the chip enable signal (CE) which determines which of the four memory blocks within the subgroup is enabled. Address multiplexers 738b-d are utilized to provide the address within the enabled memory block, and the signal which determines whether data is being read from or written to the selected address. Address multiplexers 739a-d and 740a-d operate identically with respect to the second and third scan memory subgroups.

Decoder 741 is a dual one of four decoder which is utilized to provide the read and write enable signals which serve as the inputs to address multiplexers 738a, 739a and 740a. Multiplexer 742 is a dual four line to one line multiplexer which is utilized to select the output of a particular subgroup of the scan memory to be output as the current data, and the output of a second subgroup to be output as the previous scan data.

With reference now to Figure 5k, there is depicted the shift registers which allow examination of the scan data temporarily stored in the scan memory. Current scan data is shifted into the sixteen bit shift register formed by eight bit shift registers 743a and 743b. Data from the previous scan is simultaneously shifted into the sixteen bit shift register formed by eight bit shift registers 744a and 744b. In this manner, current data may be compared to previous data and redundancies in current data may be examined in a bit by bit manner, as the data shifts through the shift registers.

Multivibrator 745 is utilized to enable scan memory address multiplexer 738a, 739a and 740a (Figure 5i) after the completion of the first scan.

Referring now to Figure 5l, multivibrators 746 and 747 are utilized to develop the shift enable signals (SFTEN and S̅F̅T̅E̅N̅) which are utilized throughout the system to enable various shift clocks and reset signals. Multivibrator 748 is utilized to develop the duplicate enable signal (D̅U̅P̅E̅N̅F̅) which is utilized during those periods when the scan data is duplicating previous values and the redundancy may be removed. Multivibrator 749 is utilized to generate the BUSY signal in response to the signal indicating the system is armed and that data is being clocked into the system.

Four bit binary counter 750 is utilized as a time out counter. After a signal is received indicating the end of scan data, counter 750 is utilized to provide the signal which shuts down the system. Flip-flop 751 and multivibrator 752 are utilized to provide additional clock signals after the end of data has been detected, to ensure that data within the system is completely processed prior to system shutdown.

Figures 5m and 5n, when joined in the manner indicated in the figures, form a schematic diagram of a section of the redundancy removal circuitry of the data compression system of the present invention.

Experimentation in the field of video image data compression has proven that while examining horizontal sections of four scan cells, there exist certain predominant repetitive patterns. These patterns are referred to herein as "Q" codes, and the most common three codes are: a black cell followed by three white cells (1000 in binary representation); two black cells followed by two white cells (1100 in binary representation); and, three black cells followed by a single white cell (1110 in binary representation).

In view of the above, it will prove beneficial to examine the scan data to determine if a series of these Q codes are present. To that end, current data present in shift registers 743a and 743b (Figure 5k) is coupled to Q code logic array 753. Logic array 753 is a field programmable logic array. Logic array 753 is utilized to determine first, whether or not one of the aforementioned three Q codes is present in the first four positions of the sixteen bit logic array, and second, how many repetitions of that code are present. It will be apparent to those skilled in the art that up to four consecutive four bit Q codes may be present at a single time in logic array 753.

The current data present in shift registers 743a and 743b is also simultaneously coupled to black/white logic array 754. In a manner similar to the operation of logic array 753, logic array 754 examines the first bit present to determine whether it is black or white, and secondly how many consecutive blacks or whites follow the first bit.

In the preferred embodiment, logic arrays 753 and 754 are utilized to detect the state of the data coupled thereto and to ensure that the redundancy present is at least eight bits in length. This requirement is a design choice; however, since the redundancy to be removed must be replaced with an identifying code and an indication of the length of the redundancy (count), eight bits seems to be a practical minimum length.

The state of the data in logic array 753 and 754 is coupled to transparent latches 755 and 756 respectively. The output of latches 755 and 756 are coupled to latches 757a and 757b, each of said latches formed by one half of a single twenty pin latch circuit, and to the address pins of count memories 758 and 759. Count memories 758 and 759 are utilized, in conjunction with four bit binary counters 760 and 761, to disable transparent latches 755 and 756 for a selected period of time. Disabling circuitry is necessary to avoid various problems present during data shifting. Those skilled in the art will appreciate that a Q code, as previously defined, loses its identity if shifted one bit. Therefore, if four Q codes are detected in logic array 753, it will be necessary to disable latch 755 until sixteen bits have been clocked through, to determine if additional Q codes are present. To this end, the output of latch 755 will address a value in count memory 758. Counter 760 will disable latch 755 and continue to do so until the selected count in count memory 758 is achieved.

Similarly the output of latch 756 will be utilized to address a value in count memory 759 and counter 761 will disable latch 756 to allow the identified data to be shifted out of logic array 754. A slight difference in operation is utilized if logic array 754 contains data which indicates a series of black cells in the scan. In this case, the latch will be disabled until the last three black cells in the previous group have been shifted to the first three positions in logic array 754. At this point, the data will be examined to determine whether or not the last three black cells comprise the beginning of a Q code. This operation repeats until the last black cell is shifted out.

Multivibrators 762 and 763 are utilized to enable latches 757a and 757b. Each time a particular redundancy has been finally coded and output by the data compression system, latches 757a and 757b are enabled to latch in the outputs of latches 755 and 756.

Referring now to Figure 50, two other possible states of scan data may be determined. First, in the event that the stream of data examined by the data compression system is not wholly black or white, or comprised of a group of consecutive Q codes, it is still possible that redundancy exists in that data. The most easily detected redundancy will exist when the data from the current scan, while varying in no discernible pattern, may entirely duplicate the data from a previous scan. One such example may be an intricate but repetitive border or edge design on a check or other document.

Such cases are identified using logic array 764. Logic array 764 can simultaneously examine eight bits of current data and eight bits of previous data to determine whether or not the data is duplicative. In a manner similar to that explained above with respect to black or white data, the output of logic array 764 is coupled to transparent latch 765. The output of transparent latch 765 is coupled to count memory 766 and is utilized to address a value which is coupled to four bit binary counter 767.

Binary counter 767 is utilized to disable latch 765 while data is being shifted through logic array 764. In the disclosed embodiment, as a matter of design choice, if the data changes from one code to another and the duplicate code was available at the beginning of the current code, the code will be changed to a duplicate code if the data being duplicated also changes and duplicates for at least five additional bits.

If the duplication of previous data does not duplicate for at least five additional bits of scan data, then the data compression system will code out the old code and change to the new code and begin to encode the new values of scan data.

After a previous redundancy has been identified, coded and output from the data compression system of the present invention, latch 768 is enabled, latching in the next type of redundancy to be coded.

Multivibrators 770 and 771 are utilized to latch in the duplicate data mode throughout the data compression system of the present invention and to continue the duplicate data mode beyond a change in state of data if the duplication continues far at least five additional bits of scan data.

As a last resort, if a series of Q codes, black cells, white cells or duplications are not present, the data compression system of the present invention will store actual data, without compression. To overcome such a determination (referred to herein as "mapping" or a "map" function) a minimal amount of redundancy is required before the data compression system will begin encoding data. As a matter of design choice, the disclosed embodiments will cease mapping and begin to encode data if at least eleven black or white cells are detected, at least three consecutive Q codes are detected, or any combination of codes which exceeds eleven bits. Logic array 769 is the mapping termination logic array and is utilized to examine the scan data for the previously enumerated situations which will overcome the mapping function.

Referring now to Figures 6a and 6b, which when joined in the manner indicated in the figures, form a schematic diagram of the count and code out circuitry of the data compression system of the present invention.

Logic gates 801a, 801b and 801c are utilized in conjunction with the logic gates associated therewith, to encode the output of latches 757a and 757b of Figure 5m, and couple that data to quad two input multiplex 803. It should be recalled that the data in registers 757a and 757b represent the code currently being utilized in the data compression system.

Similarly, logic gates 802a, 802b and 802c are utilized, in conjunction with the logic gates associated therewith, to encode the outputs of latches 755 and 756 of Figure 5m. Latches 755 and 756 are the transparent latches utilized to hold the data which represents the next data to be utilized in the data compression system. Thus, when a section of data is output by the system, the next data to be coded out is switched through multiplex 803.

Those skilled in the art will appreciate that in addition to the type of redundancy being removed from the data stream, it will be necessary to include the length of the redundancy in order to allow eventual reconstruction of the redundancy. To this end, counters 804, 805 and 806 form a twelve bit binary counter. The counter thus formed provides inputs to the field programmable logic array 807 which controls the coded count counters. Again, as a matter of design choice, the data compression system of the present invention includes certain maximum data counts in each type of redundancy. The selection of a particular maximum count is based upon requirements of the code selected and the physical likelihood that certain redundancies occur with greater length than other redundancies. The longest count acceptable in the disclosed embodiment of the present invention is 4096 bits in either the white cell mode or the duplicate mode. Each of the other modes has a lower maximum count_{.}

When the counter formed by four bit counters 804, 805 and 806 reaches the maximum count of 4095, rollover multivibrator 808 is set on the next clock, and the output of multivibrator 808 is utilized to ensure various actions.

The lower maximum counts available for black cell mode or Q code mode make it advisable from a data compression viewpoint, to operate in duplicate mode or white cell mode if possible. Multivibrator 809 is utilized, to force the data compression system into the duplicate mode, if a code length overflow condition is reached by counters 804, 805 and 806 in other than the white cell mode (white cell mode maximum count being equal to duplicate mode maximum count), and the duplicate mode is set. The forced duplicate mode will also occur if a code change occurs (black to white, for example) and the duplicate mode could have been utilized. Multivibrator 810 is utilized, for similar purposes, to keep track of the cell count in a mapping mode of operation. If a map count occurs which is greater than five cells and less than eight, and the duplicate mode could have been utilized at the beginning of the count, the duplicate mode will be forced, rather than allow a map code.

Referring now to the figure formed by joining Figures 6c and 6d in the manner indicated, there is depicted a schematic diagram of additional circuitry including the duplicate mode circuitry of the data compression system of the present invention.

Multivibrator 811 is the circuit element utilized to keep the data compression system in the mapping mode of operation, until one of the aforementioned special map termination conditions occurs. Multivibrator 812 is the circuit element utilized to enable a change to duplicate code when the maximum data count occurs for a redundancy type other than white cell (white cell maximum count being equal to duplicate cell maximum count).

The group of logic gates labeled 813, and the inputs associated therewith, are utilized to enable logic array 814 after a sufficient time period has elapsed to allow the previously identified data to be clocked through. The output of logic gates 813 is then utilized to enable logic array 814, the decision logic array. Logic array 814 is utilized to determine whether or not the code present should be coded out.

Logic array 815 is utilized to control four bit counters 816, 817 and 818, which are utilized to generate the coded count of the section of data. Counter 819 is the duplicate mode load counter and is utilized to count the number of times the duplicate counter has been loaded.

Quad multiplexers 820, 821 and 822 are utilized to output the duplicate mode cell coded count or the coded count of the number of cells in a black or white cell count, a Q code count or a mapping count, as selected by logic gate 823.

With reference now to the figure formed by joining Figured 6e and 6f in the manner indicated, there is depicted buffers 824 and 825. Buffers 824 and 825 are first in-first out (FIFO) buffers that are utilized to control the cell count during a mapping function, to determine how many cells are utilized during a particular mapping function.

Multivibrator 826 is utilized to provide additional bits to fill up a four bit word in the FIFO data buffers in order to permit transfer of the cells stored therein. Output control counters 828 and 829 are four bit counters which are utilized to count the number of cells output from the buffers during the mapping mode of operation. Comparator 827 checks the output of buffers 824 and 825 against a reference signal to determine if the maximum map count was coded. Comparator 827 is then utilized to prevent multivibrators 831 and 832 from flushing out the remaining data stored in the map data buffer, if the mapping function has been coded out due to a maximum count. If the mapping function has been terminated due to other than a maximum count (a forced duplicate mode, or a code change) multivibrators 831 and 832 are utilized to flush out a single four bit byte in the data buffer to indicate the end of a mapping function data stream.

Logic gates 833 and multiple multivibrator 834 are utilized to generate and latch out a terminal count at the end of transmitted data. This artificial count is referred to as a terminal count and is utilized to allow completion of the compression of the final bits of data.

Referring now to Figures 6g and 6h, when joined in the manner indicated in the figures, there is detected multivibrator 835, which is utilized to delay the data entering buffer 836. Buffer 836 is a four by sixteen bit FIFO buffer that is utilized to temporarily store data during a mapping function. Recalling that a mapping cell count of greater than five cells and less than eight cells may result in a forced duplicate mode, if duplication is possible, it should be apparent to those skilled in the art that at least eight cells in a mapping function mode must be examined before a map code is possible. Thus, buffer 836 is utilized to provide temporary storage until such a decision is made. Logic gate 838 is utilized to reset buffer 836 if a forced duplicate mode occurs.

In the event that eight mapping function mode cells are encountered, and the forced duplicate mode is not utilized, multivibrator 839 is utilized to dump the data from buffer 836 into four by sixty-four buffer 837. Buffer 837 is utilized as a first in-first out buffer which stores the data utilized during a map mode of operation. Multivibrator 839 will also cause the data in buffer 836 to dump into buffer 837 if the data terminates prior to eight bits and is coded out as a map code.

Quad multivibrator 840 is utilized in conjunction with multivibrator 834 (see Figure 6f) to provide additional delayed terminal count signals in the manner explained above. Multivibrator 841 is the serial out clock enable circuit and is utilized to enable the output of buffer 837 when it is desired to output the map data.

Multivibrator 842 is the master serial output "enable latch which enables the various code, count and map buffer outputs. Multivibrator 843 is the load output counter latch which is utilized to detect the fact that data is present at the various counter control buffers, such as buffers 824 and 825 (see Figure 6e) and to load the counters. Multivibrator 844 is the transfer out parallel latch which is utilized to detect the terminal count signals which indicate that each counter has reached the end of the count desired. After all terminal counts are detected, the data in storage is transferred out in parallel, and latch 843 is then utilized to latch in new counter control data. Multivibrator 845 is utilized to disable the output of multivibrator 844, at logic gate 846, after the data has been transferred out, to ensure that only one set of data is transferred out.

Multivibrator 847 is utilized to, generate the serial output clock to the code buffer and multivibrator 848 is utilized to generate the serial output clock to the count buffer. These two multivibrators are then responsible for serially outputting both the specific code and the count of cells within that code.

With reference now to Figure 6i, there is depicted a schematic representation of the count bit shifter circuitry of the present invention. The number of bits in a particular count may vary from a maximum of eleven bits to a minimum of two bits. In order to accurately keep track of the count in a particular code, it is necessary to keep track of the most significant bit of the count. The least significant bit of the count is fixed and relatively easy to obtain, however, the most significant bit must be ascertained.

Logic array 852 is utilized to determine how many bits are present in a particular code. The inputs to logic array 852 include the particular code encountered and the number of times the count has been loaded. Utilizing this input data, logic array 852 is coupled to bit shifters 853-858, to control the position of the most significant bit of the count.

Bit shifters 853-858 are four bit shifters with three state outputs that shift each four bit word from zero to three places. Thus, under the control of logic array 852, it is possible to shift the most significant bit of the count to a desired position. In the preferred embodiment, the most significant bit of the output count is shifted into the first bit to be serially output.

Referring now to Figures 6j and 6k, when joined in the manner indicated in the figures form a schematic diagram of a section of the output circuitry of the data compression system of the present invention. Logic array 859 generates the control information for the code and count logic arrays. The outputs of logic array 859 are coupled to four by sixteen bit buffers 860 and 861. The data thus stored in buffers 860 and 861 is utilized to control four bit counters 862 and 863 respectively. Counters 862 and 863 are utilized to generate selected terminal count signals.

Logic arrays 864 and 865 are also coupled to the code and load count signals and are utilized to generate the actual code to be serially output. The actual code is loaded into buffers 866-869 for serial outputting. Buffers 866-869 are all four by sixteen bit first in-first out buffer memories. Buffers 866-869 give the system the capability of utilizing up to sixteen bits of code; however, in the disclosed embodiment not all bits are utilized.

Buffers 870-872 are the count buffers. The count data output from bit shifters 853-858 (Figure 6i) is coupled to buffers 870-872 to be serially output from the system. As above, buffers 870-872 are four by sixteen bit first in-first out buffer memories. Logic gates 873 are utilized, in conjunction with certain outputs of counter 863 to generate an additional terminal count signal.

Referring now to Figure 6l, there is depicted a schematic representation of the section of the data compression system that is utilized to determine the size of the document image. Four bit counters 874 and 875 are utilized to divide the coded output of the data compression system by thirty-two. Each time counters 874 and 875 reach thirty-two, the total in four bit counters 876-879 is incremented. Thus, the data in counters 876-879 represents how many thirty-two bit words are present in each image.

The outputs of counters 876-879 are coupled to registers 880 and 881 where the control device may access the data. Multivibrator 882 is utilized to store the count at the end of an image. Multivibrator 882 is reset when its contents are read. Multivibrator 883 is utilized to initialize the counters by forcing the counters to a load condition until receipt of a first data clock.

Referring now to Figure 6m, there is depicted a schematic representation of the logic circuitry which allows a coded representation to be output from the data compression system. Logic gate 884 will allow a code out whenever a code change is allowed (CNGAL) or the end of data has been reached. Logic gate 885 will allow a code out during a map function if the code is changed to a duplicate mode.

Logic gate 886 will allow a code out if one of these special map mode termination sequences is encountered, as previously discussed. Logic gate 887 is the logic gate which allows black cell codes to be terminated early to begin Q code mode of operation, as discussed herein. In conjunction with logic gate 887, multivibrator 888 is utilized to ensure that greater than seven black cells have been detected prior to allowing an early termination of black cell mode of operation to code Q codes.

Multivibrator 889 is utilized to detect the overflow condition which will result when the bit counters exceed the maximum count for a particular mode of operation. In such event, the code in question is output and the system begins counting anew.

Each of the previously discussed code out signals are applied to multivibrator 890, which is utilized to generate the parallel load signal which is utilized to load out the current code and count. Multivibrator 891 is triggered along with multivibrator 890 and is utilized to select certain multiplexers which allow a look ahead function for the various logic arrays. Multivibrator 892 is utilized to generate a buffer overflow error signal if the data compression system of the present invention attempts to load additional data into the output buffers while these buffers are full.

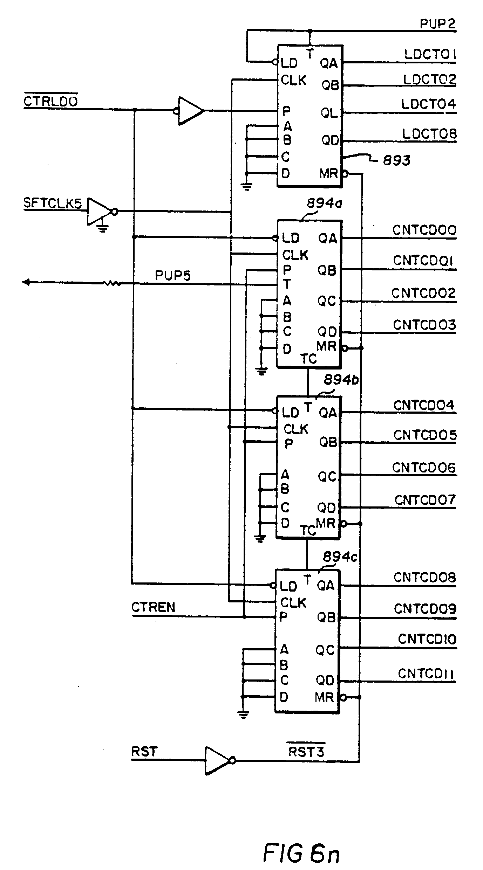

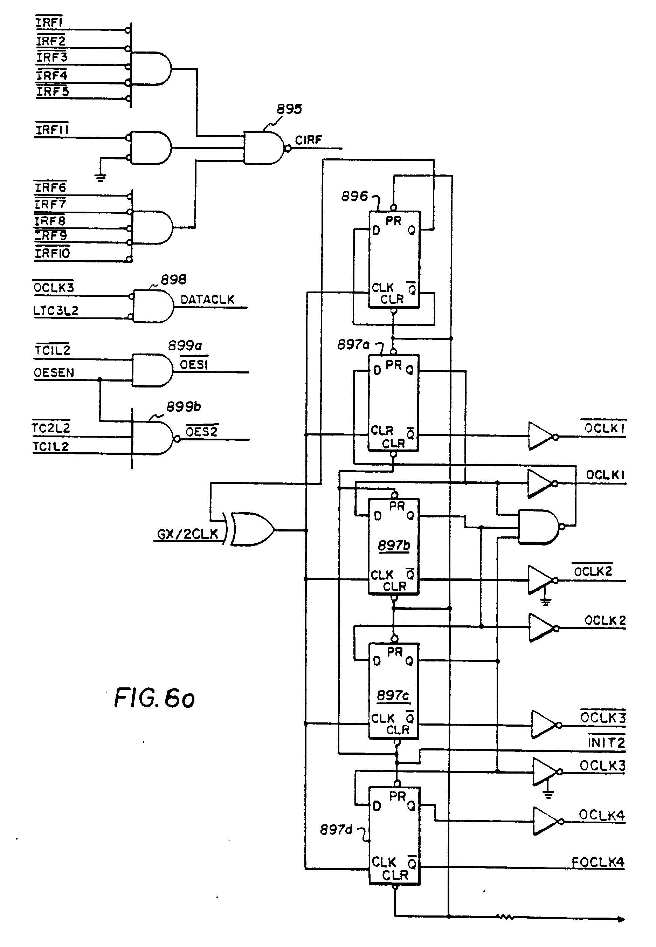

Referring now to Figure 6n, there is depicted the coded counters for the data compression system of the present invention. Counter 893 is the load counter which is utilized to determine how many times counters 894a-894c have been loaded. Counters 894a-894c are utilized to generate the coded count of the number of cells in a current black, white, Q code or mapping mode of operation. Referring finally to Figure 8o, logic gate 895 and the logic gates associated therewith are utilized to generate an internal register full signal in the event that any one of the first in-first out buffers is full. The internal register full signal is utilized to generate an error signal if additional data is loaded into a full register.

Multivibrators 896 and 897a-897d are utilized to generate a four phase clock signal for utilization in the operation of the data compression system. Multivibrator 896 is utilized to double the GX/2 clock from multivibrators 702 and 733 (Figure 5a) from 15.25 megahertz back up to 30.5 megahertz. In turn, multivibrators 897a-897d are then utilized to divide the 30.5 megahertz clock down into a four phase clock in a manner well known in the art.

## Claims

1. A video data compression system for data compression of signals representative of the video image of a document, said system including means (200) continuously transporting said document along a predetermined path; means (510) for video scanning said document during said continuous transporting and for producing coded signals respectively representative of black and white sections of the image of said documents; means (753, 754) for comparing selected ones of the coded signals and for generating unique redundancy codes indicative of unique relationships resulting from said comparison; and means (755, 756) for replacing the coded signals having unique relationships with said unique redundancy codes, said system being characterized by means (606) for producing a plurality of consecutive scans along respective first axes transverse to said predetermined path, means (743a, 743b) for serializing the coded signals such that the coded signals are arranged in discrete groups corresponding to respective sequences of coded signals along respective second axes parallel to the predetermined path and the discrete groups are arranged in succession, and said means (753, 754) for comparing and generating said redundancy codes being operable for analyzing the coded signals of each group in sequence along the corresponding second axis and for analyzing the discrete groups in succession to determine said unique relationships in a portion of the image represented by the plurality of consecutive scans.

2. The system as defined by claim 1 wherein said means (753,754) for generating said redundancy codes is operable in response to consecutive scans indicating a black section followed by three adjacent white sections; two adjacent black sections followed by two adjacent white sections; or three adjacent black sections followed by an adjacent white section.

3. The system as defined by claim 1 wherein said means (754,754) for generating said redundancy codes is operable in response to consecutive scans indicating identical data.

4. The system as defined by claim 1 wherein the direction in which the coded signals of one scan is compared with the coded signals of a prior scan to a direction along which data is sequentially arranged on the document.

5. The system as defined by claim 1 further comprising temporary storage means (734,735,736) for temporarily storing the coded signals of selected ones of said scans.

6. The system as defined by claim 5 further comprising address multiplexing means (738,739,740) for enabling the coded signals to be written into and read from selected portions of said temporary storage means (734,735,736), said coded signals for being written into said temporary storage means (734,735,736) in sequence along said transverse direction and for being read from said temporary storage means (734,735,736) along said axis parallel to said predetermined path.

7. The system as defined by Claim 1 further comprising means (738,739,740) for continuously analyzing a predetermined number of consecutive scans in sequence along the predetermined path.

8. The system as defined by Claim 7 wherein said predetermined number of consecutive scans is at least three.

## Patentansprüche

1. Videodatenkompressionssystem für die Datenkompression von Signalen, die für das Videobild eines Dokuments repräsentativ sind, enthaltend eine Einrichtung (200) zum kontinuierlichen Transportieren des Dokuments längs eines vorbestimmten Weges; eine Einrichtung (510) zum Videoabtasten des Dokuments während des kontinuierlichen Transports und zum Erzeugen codierter Signale, die jeweils für schwarze und weiße Abschnitte des Abbildes des Dokuments repräsentativ sind; eine Einrichtung (753, 754) zum Vergleichen ausgewählter der codierten Signale und zum Erzeugen einzigartiger Redundanzcodes, die für einzigartige Verhältnisse kennzeichnend sind, die aus diesem Vergleich resultieren; und eine Einrichtung (755, 756) zum Ersetzen der codierten Signale, die die einzigartigen Verhältnisse aufweisen, durch die genannten einzigartigen Redundanzcodes, gekennzeichnet durch Einrichtungen (606) zum Erzeugen mehrerer aufeinanderfolgender Abtastungen längs jeweils erster Achsen quer zu dem vorbestimmten Weg, eine Einrichtung (743a, 743b) zum Inseriebringen der codierten Signale derart, daß die codierten Signale in diskreten Gruppen entsprechend den jeweiligen Sequenzen codierter Signale längs jeweils zweiter Achsen parallel zu dem vorbestimmten Weg angeordnet sind und die diskreten Gruppen aufeinder angeordnet sind, und wobei die genannte Einrichtung (753, 754) zum Vergleichen und Erzeugen der Redundanzcodes dazu dienen, die codierten Signale jeder Gruppe in der Folge längs der entsprechenden zweiten Achse zu analysieren und die diskreten Gruppen aufeinanderfolgend zu analysieren, um die genannten einzigartigen Verhältnisse in einem Teil des Bildes zu bestimmen, der durch die aufeinanderfolgenden Abtastungen repräsentiert wird.

2. System nach Anspruch 1, bei dem die Einrichtung (753, 754) zum Erzeugen der Redundanzcodes in Abhängigkeit von aufeinanderfolgenden Abtastungen arbeitet, die einen schwarzen Abschnitt, gefolgt von drei benachbarten weißen Abschnitten, zwei benachbarte schwarze Abschnitte, gefolgt von zwei benachbarten weißen Abschnitten oder drei benachbarte schwarze Abschnitte, gefolgt von einem benachbarten weißen Abschnitt, anzeigen.

3. System nach Anspruch 1, bei dem die Einrichtung (753, 754) zum Erzeugen der Redundanzcodes in Abhängigkeit von aufeinanderfolgenden Abtastungen arbeitet, die identische Daten anzeigen.

4. System nach Anspruch 1, bei dem die Richtung, in der die codierten Signale einer Abtastung mit den codierten Signalen einer früheren Abtastung verglichen wird, eine Richtung ist, längs der die Daten sequentiell auf dem Dokument angeordnet sind.

5. System nach Anspruch 1, weiterhin enthaltend eine Zwischenspeichereinrichtung (734, 735, 736) zum Zwischenspeichern der codierten Signale ausgewählter Abtastungen.

6. System nach Anspruch 5, weiterhin enthaltend eine Adreßmultiplexiereinricntung (738, 739, 740), die es ermöglicht, codierte Signale in ausgewählte Abschnitte der Zwischenspeichereinrichtung (734, 735, 736) einzulesen und daraus auszulesen, wobei die codierten Signale in die Zwischenspeichereinrichtung (734, 735, 736) nacheinander längs der Querrichtung eingeschrieben werden und aus der Zwischenspeichereinrichtungen (734, 735, 736) längs der Achse parallel zu dem vorbestimmten Weg ausgelesen werden.

7. System nach Anspruch 1, weiterhin enthaltend eine Einrichtung (738, 739, 740) zum kontinuierlichen Analysieren einer vorbestimmten Anzahl aufeinanderfolgender Abtastungen in Folge längs des vorbestimmten Weges.

8. System nach Anspruch 7, bei dem die vorbestimmte Anzahl aufeinanderfolgender Abtastungen wenigstens drei ist.

## Revendications

1. Système de compression de données vidéo pour la compression de données de signaux représentatifs de l'image vidéo d'un document, ledit système comprenant un moyen (200) pour déplacer ledit document de manière continue le long d'un trajet prédéterminé ; un moyen (510) pour examiner par balayage vidéo ledit document pendant ledit déplacement continu et pour produire des signaux codés respectivement représentatifs des parties noires et blanches de l'image dudit document ; un moyen (753, 754) pour comparer certains signaux choisis parmi les signaux codés et pour produire des codes de redondance uniques indicatifs des relations uniques résultant de ladite comparaison ; et un moyen (755, 756) pour remplacer les signaux codés ayant des relations uniques par lesdits codes de redondance uniques, ledit système étant caractérisé par un moyen (606) de production d'une pluralité de balayages consécutifs le long de premiers axes respectifs perpendiculaires audit trajet prédéterminé, par un moyen (743a, 743b) de sérialisation des signaux codés de telle façon que les signaux codés soient disposés en groupes discrets correspondant aux séquences respectives des signaux codés le long de seconds axes respectifs parallèles au trajet prédéterminé, et les groupes discrets sont disposés à la suite l'un de l'autre, et en ce que ledit moyen (753, 754) de comparaison et de production desdits codes de redondance est mis en oeuvre pour analyser les signaux codés de chaque groupe en séquence le long du second axe correspondant et pour analyser les groupes discrets se suivant pour déterminer lesdites relations uniques dans une partie de l'image représentée par la pluralité de balayages consécutifs.

2. Système selon la revendication 1, dans lequel ledit moyen (753, 754) de production desdits codes de redondance est mis en oeuvre en réponse à des balayages consécutifs indiquant une partie noire suivie par trois parties adjacentes blanches ; deux parties adjacentes noires suivies par deux parties adjacentes blanches ; ou trois parties adjacentes noires suivies par une partie adjacente blanche.

3. Système selon la revendication 1, dans lequel ledit moyen (754, 754) de production desdits codes de redondance est mis en oeuvre en réponse à des balayages consécutifs indiquant des données identiques.

4. Système selon la revendication 1, dans lequel la direction suivant laquelle les signaux codés d'un balayage sont comparées aux signaux d'un balayage antérieur correspond à la direction , suivant laquelle les données sont disposées de manière séquentielle sur le document.

5. Système selon la revendication 1, comprenant de plus un moyen de stockage temporaire (734, 735, 736) pour stocker temporairement les signaux codés de certains balayages choisis parmi lesdits balayages.

6. Système selon la revendication 5, comprenant de plus un moyen de multiplexage d'adresses (738, 739, 740) pour permettre aux signaux codés d'être écrits et lus dans/depuis des parties choisies dudit moyen de stockage temporaire (734, 735, 736), lesdits signaux codés étant écrits dans ledit moyen de stockage temporaire (734, 735, 736) en séquence le long dudit sens perpendiculaire et étant lus depuis ledit moyen de stockage temporaire (734, 735, 736) le long dudit axe parallèle audit trajet prédéterminé.

7. Système selon la revendication 1, comprenant de plus un moyen (738, 739, 740) pour analyser de manière continue un nombre prédéterminé de balayages consécutifs en séquence le long d'un trajet prédéterminé.

8. Système selon la revendication 7, dans lequel ledit nombre prédéterminé de balayage consécutifs est au moins égal à trois.
